(19) Europäisches Patentamt
European Patent Office
Office européen des brevets

(11) **EP 1 744 058 A1**

(12) **EUROPEAN PATENT APPLICATION**
published in accordance with Art. 158(3) EPC

(43) Date of publication:
**17.01.2007 Bulletin 2007/03**

(51) Int Cl.:
***F03D 7/04*** (2006.01)

(21) Application number: **04731728.4**

(22) Date of filing: **07.05.2004**

(86) International application number:
**PCT/JP2004/006499**

(87) International publication number:
**WO 2005/108784 (17.11.2005 Gazette 2005/46)**

(84) Designated Contracting States:
**DE DK ES**

(71) Applicant: **MITSUBISHI DENKI KABUSHIKI KAISHA**
**Chiyoda-ku, Tokyo 100-8310 (JP)**

(72) Inventor: **YOSHIDA, Yasuo,**
**c/o Mitsubishi Denki K.K.**
**Tokyo 1008310 (JP)**

(74) Representative: **Popp, Eugen et al**
**MEISSNER, BOLTE & PARTNER**
**Postfach 86 06 24**
**81633 München (DE)**

(54) **WIND POWER GENERATION EVALUATION SYSTEM AND PREDICTION CONTROL SERVICE SYSTEM FOR WIND POWER GENERATOR**

(57)     A wind power generation evaluation system includes: a laser aerovane 100-300 that measures, with laser, the direction and velocity of wind at a distance from a wind power generator connected to an electric power system to predict the direction and velocity of wind at the wind power generator; a second aerovane 500 that measures them at the wind power generator; a wind power generation output calculation unit 400a that integrates a difference between power outputs calculated based on measurements by the laser aerovane and the second aerovane while referring to a windmill performance curve indicating output power characteristic of the wind power generator regarding wind velocity, to obtain a difference between the amounts of generated power; and an additional value calculation unit 400b that calculates additional value of an influence on the environment based on the difference between the amounts of generated power obtained by the calculation unit 400a.

FIG. 18

**Description**

TECHNICAL FIELD

Concerning a wind power generator, a wind farm including a plurality of wind power generators, and an electric power supply system formed of a combination of a wind power generator, power generating means of another kind, loads, etc., the present invention relates to a wind power generation evaluation system that improves the effects of operations of the wind power generators and that evaluates benefits obtained therefrom, and to a predictive control service system for use with a wind power generator that utilizes the wind power generation evaluation system.

BACKGROUND ART

In one of the conventional wind power generation systems for predicting a state of wind, a wind vector ahead of the wind power generator is measured with the use of a Doppler radar utilizing radio wave, an output value of the wind power generator is predicted on the basis of the wind vector, and output control of the electric power system side generator is carried out on the basis of the predicted output value (see JP-A 2002-152975, for example).

In another conventional system, a combination of a wind power generator and a Diesel-engine generator is used as a wind power generation system. On the basis of a value actually measured by anemometers placed around the wind power generator, a value of energy output generated by the wind power generator is calculated using a wind-velocity database. If the calculated output value increases, the Diesel-engine generator is stopped, while if the output value decreases, the Diesel-engine generator is operated (see JP-A 1999-159436, for example).

However, in the above-described conventional system that observes the state of the wind with a Doppler radar, the Doppler radar is placed to face upward ahead of the blades of the wind power generator, and therefore following great variations of the wind, e.g., a reversal of the wind direction, requires provision of a plurality of Doppler radars or provision of a large-scale apparatus to move the Doppler radar around the wind power generator. Furthermore, the Doppler radar, which utilizes electromagnetic waves, may affect the environment, e.g., by electromagnetic pollution.

Also, the above-described system that combines a wind power generator and a Diesel-engine generator just supplies a certain amount of electric power by controlling the Diesel-engine generator combined with the wind power generator, and cannot improve the performance of the wind power generator itself.

Also, there are no conventional functions that evaluate benefits obtained by enhancing or smoothing the output power through the use of predictive control based on wind-state observation.

The present invention has been made to solve the problems above, and an object of the present invention is to provide a wind power generation evaluation system that performs predictive control based on wind-state observation to enable highly efficient operation or output stabilization (smoothing) of a wind power generation system, with a relatively simple structure and without causing electromagnetic pollution, and that further evaluates benefits obtained by the operation of the wind power generation system using the wind-state-observing predictive control, and to provide a predictive control service system for use with a wind power generator that utilizes the wind power generation evaluation system.

DISCLOSURE OF THE INVENTION

To achieve the above object, the present invention provides a wind power generation evaluation system characterized by including: at least one wind power generator connected to an electric power system; a laser aerovane that measures a wind direction and a wind velocity at a position distant from the wind power generator by using a laser, so as to predict a wind direction and a wind velocity at the wind power generator; a second aerovane that measures a wind direction and a wind velocity at the wind power generator; wind power generation output calculation means that integrates a difference between power outputs calculated on the basis of measurements by the laser aerovane and the second aerovane while referring to a windmill performance curve indicating an output power characteristic of the wind power generator with respect to the wind velocity, so as to obtain a difference between the amounts of generated power; and additional value calculation means that calculates an additional value of an influence on the environment on the basis of the difference between the amounts of generated power obtained by the wind power generation output calculation means.

BRIEF DESCRIPTION OF THE DRAWINGS

FIG. 1 is a view showing a wind power generation system according to the present invention.

FIG. 2 is a schematic diagram showing a constitution of a laser aerovane according to the present invention.

FIG. 3 is a schematic view showing an S-polarized light and a P-polarized light of the laser aerovane shown in FIG. 2.

FIG. 4 is a flowchart showing yaw angle/pitch angle control logic according to the present invention.

FIG. 5 is a graph showing how output fluctuation is suppressed and controlled according to the present invention.

FIG. 6 is a schematic diagram of a constitution in which a power converter and an output-smoothing device are arranged and connected to a variable-speed generator according to the present invention.

FIG. 7 is a schematic diagram showing a constitution of a wind farm according to the present invention.

FIG. 8 is a flowchart showing control logic according to the present invention.

FIG. 9 is a schematic diagram showing a constitution of a wind power generation system provided with an output-smoothing device according to the present invention.

FIG. 10 is a graphic diagram showing how output values of the wind power generation system are smoothed according to the present invention.

FIG. 11 is a graphic diagram showing composite output target values and wind power generation output of the wind power generation system according to the present invention.

FIG. 12 is a control block diagram of the wind power generation system according to the present invention.

FIG. 13 is a flowchart showing control of the wind power generation system according to the present invention.

FIG. 14 is a flowchart following FIG. 13.

FIG. 15 is a diagram illustrating an effect of the yaw control using a laser aerovane in a wind power generation evaluation system according to a first embodiment of the present invention.

FIG. 16 is a diagram illustrating an effect of the pitch control using the laser aerovane in the wind power generation evaluation system according to the first embodiment of the present invention.

FIG. 17 is a diagram illustrating the principle on the basis of which the pitch control increases the output in the wind power generation evaluation system according to the first embodiment of the present invention.

FIG. 18 is a diagram showing a configuration of the wind power generation evaluation system according to the first embodiment of the present invention.

FIG. 19 is a diagram illustrating a connection between a wind power generation evaluation system and a resistor of an electric power system according to a second embodiment of the present invention.

FIG. 20 is a diagram illustrating how fluctuations of the wind power output are smoothed by the resistor in the wind power generation evaluation system according to the second embodiment of the present invention.

FIG. 21 is a diagram schematically showing a configuration of an application of the laser aerovane to a large number of wind power generators according to the second embodiment of the present invention.

FIG. 22 is a diagram showing an example of a hybrid power generation system according to a third embodiment of the present invention.

FIG. 23 is a diagram showing an example in which electric power is smoothed by using a laser aerovane in combination with Diesel-engine generators in the hybrid power generation system of FIG. 22.

FIG. 24 is a diagram showing a connection between a wind power generation evaluation system and an output-smoothing device of an electric power system according to the third embodiment of the present invention.

BEST MODE FOR CARRYING OUT THE INVENTION

The present invention will now be described referring to the drawings. First, the basic configuration, operations, etc. of a wind power generation system having a wind power generation evaluation system will be described according to the present invention (hereinafter, referred to simply as a wind power generation system) .

<Wind power generation system>

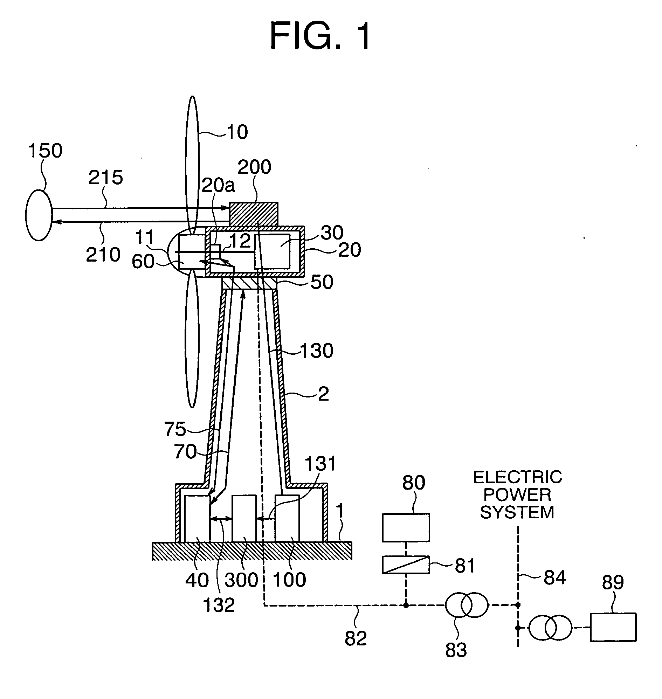

FIG. 1 is a sectional side view of a wind power generator (a windmill) according to the present invention. As shown in FIG. 1, a tower section 2 is built on a pedestal 1, and a yaw angle control drive 50 is mounted on the top of the tower section 2. Furthermore, a nacelle 20 controlled so as to rotate within a horizontal plane by driving the yaw angle control drive 50 is mounted on the top of the yaw angle control drive 50. It is desirable to control the windmill so that plane where a propeller of the windmill rotates is changed conforming to change in direction of wind and catches the wind right in front at all times. It is yaw angle that is changed at this time, and controlling the yaw angle is called yaw control. Rotating the nacelle 20 within a horizontal plane can change the yaw angle.

Blades 10 constituting a propeller of the propeller-type windmill are mounted on a rotary shaft 12 through a hub (the portion on which the blades 10 are attached) 11, and driving a pitch angle control drive 60 controls angles of the blades 10. In order to effectively utilize wind energy, it is necessary that each blade 10 catching the wind be located at an optimum angle, and the angle of the blade 10 at this location is called a pitch angle (blade angle). A generator 30, a portion for detecting the rotation speed (number of rotations) of the rotary shaft 12, braking equipment, an amplifier, and so on connected with the rotary shaft 12 are accommodated in the nacelle 20. The propeller rotates on a plane perpendicular to the rotary shaft 12 on which the blades 10 are mounted.

A wind-velocity detecting optical system section (hereinafter referred to as the optical system section) 200 emits a laser beam 210 to irradiate aerosol 150 ahead of (at an arbitrary distance from) the wind power generator with the laser beam and detects a scattered light 215 of the laser beam 210. The optical system section 200 is mounted on the top of the nacelle 20. The aerosol 150 is a kind of dust in the air moving with the wind at the same velocity and in the same direction as the wind. Therefore, the direction and velocity of the wind at a place can be observed by grasping the movement of the aerosol 50. Information obtained from the scattered light 215 (data on the wind direction and wind velocity of the aerosol 150) is sent to an aerovane body section (hereinafter referred to as main body section) 100 through an optical fiber 130. Data for calculating the wind direction and wind velocity of the aerosol 150 are extracted from the scattered light 215 and processed in the main body section 100.

The data on the wind direction and wind velocity obtained in the main body section 100 are converted to electrical digital signals to be sent to an aerovane signal processing section (hereinafter referred to as signal processing section) 300 through a communication system section 131. On the basis of the data on the wind direction and wind velocity of the aerosol 150, the signal processing section 300 predicts a state of the wind (wind direction, wind velocity, arrival time of wind, and so on) blowing toward the wind power generator, i.e., a state of the wind to be utilized in generating electric power in the near future (after several to several ten seconds). The main body section 100, optical system section 200, and signal processing section 300 constitute a laser aerovane.

The data on wind-state prediction calculated by the signal processing section 300 is transmitted to a controller 40 through a communication system section 132. On the basis of the given wind-state data, the controller 40 issues commands to the yaw angle control drive 50 and the pitch angle control drive 60 through communication system sections 70 and 75. The yaw angle control drive 50 causes the yaw angle to change and the pitch angle control drive 60 causes the pitch angles to change. Thus, it becomes possible to operate the wind power generator with high efficiency, i.e., high-efficiency utilization of wind power energy. The controller 40 scans and grasps the current yaw angle, pitch angles, and number of rotations of the windmill shaft (number of rotations or rotation speed) at all times.

It is assumed herein that the number of rotations of the windmill is fixed, or adjustable only in steps, or continuously adjustable within a predetermined range. In a variable-speed wind power generator, the rotation speed is selected according to the velocity of the wind to achieve the maximum efficiency at all times, or the rotation speed is adjusted so as to reduce variations of the electric power given to the system.

A power cable 82 is connected with the generator 30 and with an electric power system 84 as the output end, with an output-smoothing device 80 connected between the generator 30 and the electric power system 84 through a power converter 81 when required, and with a transformer 83 placed between the electric power system 84 and the power converter 81.

The optical system section 200 of the laser aerovane can be located on the ground at some distance from the tower section 2 of the wind power generator or on the top of a pole set up near the wind power generator on the yaw angle control drive 50 as in FIG. 1 on condition that the yaw angle is variable. It is also preferable that the optical system section 200 be mounted on a side face of the tower section 2. The blades 10 receive the wind and convert wind power energy into a rotating force and the generator 30 converts the rotation energy of the blades 10 into an electric power. The controller 40 or another controlling mechanism receives and analyzes data necessary for controlling the wind power generator such as a yaw angle, the number of rotations of the windmill, and the current direction and velocity of the wind. Then the controller 40 or another controlling mechanism gives a control command to each control drive (for example, braking equipment) of the wind power generator.

<Laser aerovane>

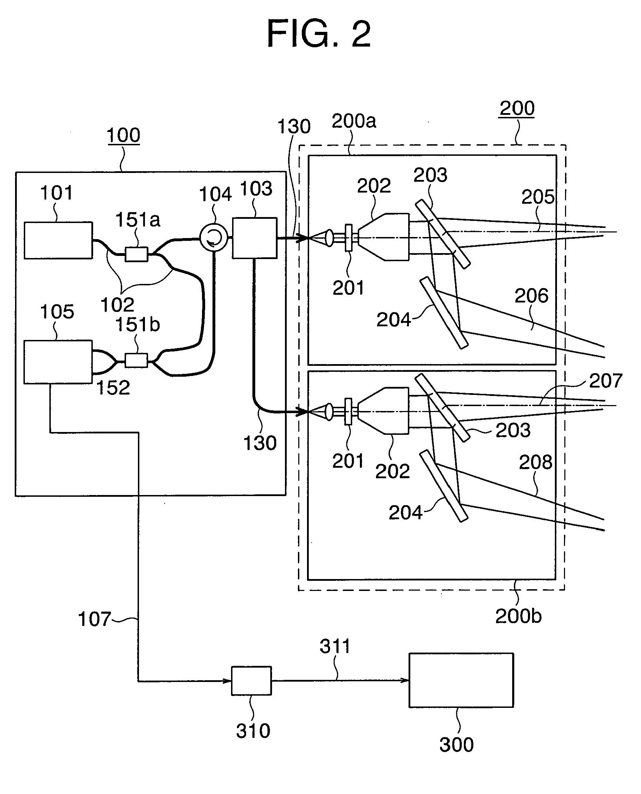

Now, an example of the construction and operation principle of the laser aerovane according to the present invention is hereinafter described with reference to FIG. 2. FIG. 2 is a schematic diagram showing an example of the construction of the laser aerovane according to the present invention. The laser aerovane is mainly composed of the main body section 100, the optical system section 200, and the signal processing section 300 as described above. A part of a laser beam emitted from a laser source 101 (for example, semiconductor laser) of the main body section 100 is sent by an optical fiber distributor 151a to a light receiver 105 through an optical fiber 102. The rest of the beam is sent to a light switch 103 through a circulator 104. The light switch 103 sends inputted light to the optical system section 200. The optical system section 200 is composed of two sections, for example, a horizontal wind-velocity detecting optical system section 200a and a vertical wind-velocity detecting optical system section 200b. The received light is divided and sent to the horizontal and vertical wind-velocity detecting optical system sections 200a and 200b, respectively.

The light sent from the light switch 103 to the horizontal wind-velocity detecting optical system section 200a is then sent to a telescope 202 through a half-wave plate 201. The light emitted from the telescope 202 is split into a P-polarized light 205 passing through a deflection beam splitter 203 and an S-polarized light 206 reflected from the deflection beam splitter 203. The P-polarized light 205 is emitted to the outside as it is, and the S-polarized light 206 is reflected from a total reflection mirror 204 and emitted to the outside. The vertical wind-velocity detecting optical system section 200b is of the same construction as the horizontal wind-velocity detecting optical system section 200a, and in the system, a P-polarized light 207 and an S-polarized light 208 are emitted to the outside.

The P-polarized light 205 and the S-polarized light 206 emitted from the horizontal wind-velocity detecting optical system section 200a are respectively emitted in two different directions on the horizontal plane. The P-polarized light 207 and the S-polarized light 208 emitted from the vertical wind-velocity detecting optical system section 200b are respectively emitted in two directions on the vertical plane. The P-polarized lights 205 and 207 and the S-polarized lights 206 and 208 correspond to the laser beam 210 shown in FIG. 1.

The P-polarized light 205, which is the laser beam 210 emitted from the optical system section 200, comes into the aerosol 150 and is scattered. Thus, the P-polarized light 205 turns into a scattered light (corresponding to the scattered light 215 shown in FIG. 1, for example) and returns to the optical system section 200 as described later. This scattered light 215 follows the reverse course through which the scattered light 215 was emitted, and is sent from the optical system section 200 to the main body section 100. The scattered light 215 is sent to the circulator 104 via the light switch 103, and the circulator 104 sends the scattered light 215 to an optical fiber coupler 151b as a optical mixer. The laser beam and the scattered light 215 directly sent from the laser source 101 are mixed in the optical fiber coupler 151 and sent to the light receiver 105 that converts the mixed light 152 into a detection signal 107 and sends the detection signal 107 to the A/D converter 310. The A/D converter 310 converts the detection signal 107 as an analog signal into a digital signal, and sends this digital signal serving as a reception signal 311 to the signal processing section 300 through the communication system section 131. The signal processing section 300 receives the reception signal 311, carries out a predetermined calculation described later, and calculates (observes) the direction and velocity of the wind at a focal point of the laser beam 210 (position of the focal point corresponds to the position of the aerosol 150). Further, a state of wind is predicted on the basis of the obtained data on the wind direction and wind velocity (observation), and necessary control information is sent to the controller 40 through the communication system section 132.

A continuous wave is employed as the laser beam 210. Especially, when employing a continuous wave of approximately 1,500 nm in wavelength, scattered light from the aerosol 150 is the strongest, and the state of the wind is detected with accuracy. In addition, the laser beam of approximately 1,500 nm in wavelength is most gentle to human eyes and is desirable in view of safety. It is possible to adopt a method utilizing a pulse wave as the laser beam 210 instead of using a continuous wave as described in this example, and either of them is preferable. It may be also preferable to arrange any mechanical aerovane on the top of the nacelle 20 and additionally use data of this mechanical aerovane in order to improve accuracy in measuring the direction and velocity of wind, when required. In the case where the Doppler effect is utilized to detect the direction and velocity of wind, it is known that the detection becomes more accurate in inverse proportion to the wavelength of the laser beam, sound wave, or the like employed in the detection. In making a comparison between the sound wave and the laser beam, the state of the wind is detected more accurately when the laser beam whose wavelength is shorter than that of the sound wave is employed.

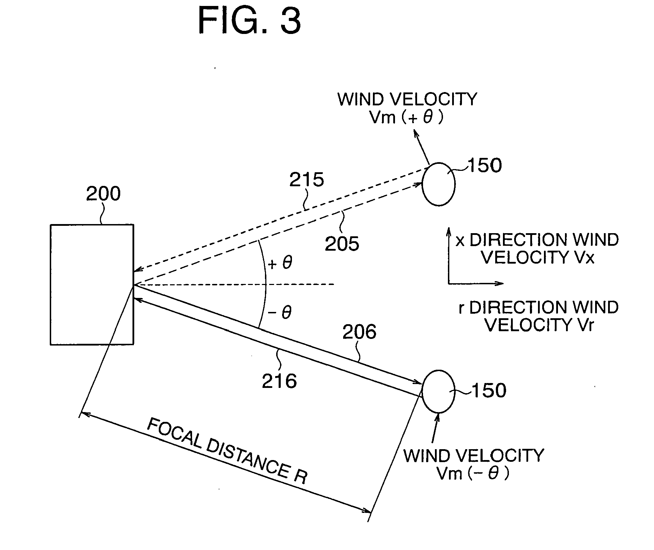

Now, the P-polarized light 205 and the S-polarized light 206 emitted from the horizontal wind-velocity detecting optical system section 200a are hereinafter described with reference to FIG. 3 schematically showing an S-polarized light and a P-polarized light according to the present invention. The P-polarized light 205 and the S-polarized light 206 are respectively emitted from the optical system section 200 onto a horizontal plane in a direction at an angle $+\theta$ and in a direction at an angle $-\theta$, on the basis of an arbitrary direction, and focused at places distant by a focal distance R (corresponding to an arbitrary distance) by means of a lens of the telescope 202. The lights are scattered from the aerosol 150 in the vicinity of the focal points, where the scattered light (scattered light of the P-polarized light) 215 and a scattered light (scattered light of the S-polarized light) 216 are generated respectively. The air contains much aerosol 150, and therefore scattered waves are also generated from points other than the focal points, but the scattered waves from the vicinity of the focal points have the highest scattering energy. Since those scattered waves (the scattered lights 215 and 216) are scattered from the aerosol 150 moving with a certain velocity, a frequency shift of $F_D$ takes place owing to the Doppler effect (Doppler shift). This shift in frequency is measured, and the velocity of the aerosol 150 is calculated.

The P-polarized light 207 and the S-polarized light 208 are emitted from the vertical wind-velocity detecting optical system section 200b on a vertical plane in a direction at an angle $+\theta$ and in a direction at an angle $-\theta$ on the basis of an arbitrary direction respectively. As described above, it is possible to detect a three-dimensional vector of the wind velocity of the aerosol 150 ahead of the wind power generator by emitting the laser beams 210 in at least three or four directions and obtaining data on each light. In the case where the laser beams 210 are emitted only in two directions, it is possible to detect a two-dimensional vector of the wind velocity. In addition, the angle of emission of the laser beam 210 is preferably $\theta=$approximately 5°, and this preferable angle varies depending upon the conditions such as a distance to the aerosol 150 to be observed.

<Calculation of the direction and velocity of wind>

Now, an example how a velocity of wind is calculated by the signal processing section 300 is hereinafter described. Information on the scattered lights 215 and 216 and information directly obtained from the laser source 101 are combined into a detection signal 107. The detection signal 107 is received as a reception signal 311, and the Doppler shift $F_D$ from the frequency of the laser source 101 to the scattered lights 215 and 216 is calculated. There is a relation among $F_D$, laser wavelength $\lambda$, and aerosol velocity Vm as shown in the following expression (1).

$$F_D = 2Vm/\lambda \cdots \cdots (1)$$

The wind velocity Vm (+θ) and the wind velocity Vm (-θ) in the ±θ directions are calculated by this expression. The wind velocity Vr (r indicates a direction along θ=0 on a horizontal plane) and the wind velocity Vx (x indicates a direction perpendicular to θ=0 on a horizontal plane) are calculated using the following expression (2) and expression (3).

$$V_r = \frac{Vm(-\theta) + Vm(+\theta)}{2} \cdot \cos\theta \cdots \cdots (2)$$

$$V_x = \frac{Vm(-\theta) - Vm(+\theta)}{2} \cdot \sin\theta \cdots \cdots (3)$$

The calculation as described above is carried out also on the data obtained by the vertical wind-velocity detecting optical system section 200b, and in combination with the data obtained by the horizontal wind-velocity detecting optical system section 200a, a three-dimensional vector of the wind velocity can be calculated. Thus, the wind direction and wind velocity of the aerosol 150 are measured with accuracy.

<Yaw angle control>

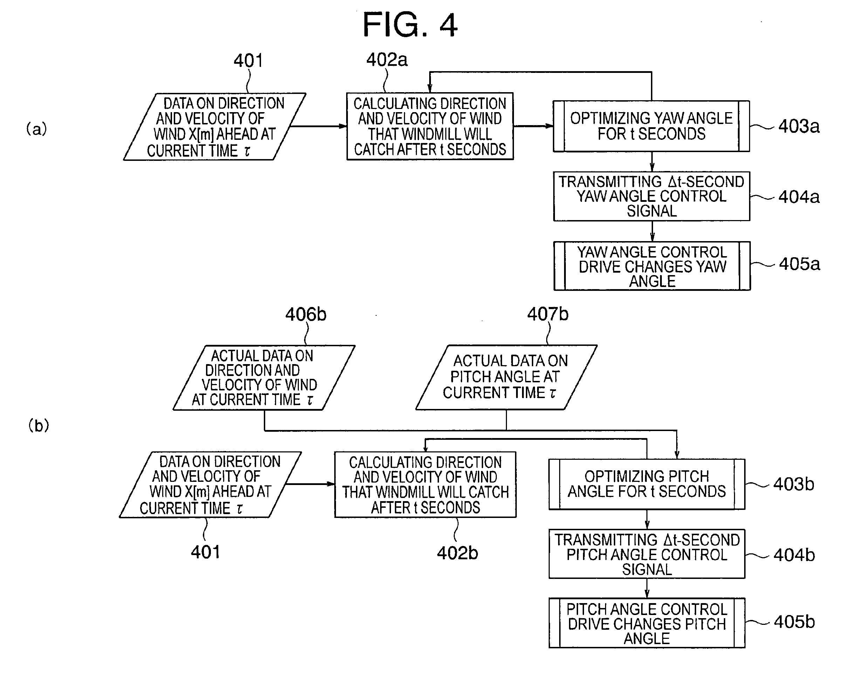

FIG. 4 is a flowchart showing yaw angle/pitch angle control logic according to the present invention. An example of yaw angle control logic according to the present invention is hereinafter described with reference to the flowchart in (a) of FIG. 4. First, the laser aerovane measures the direction and velocity of the wind X[m] ahead (located at an arbitrary distance from the wind power generator) at the current time τ (step 401). On the basis of the obtained data on the direction and velocity of the wind, a wind direction φ(τ+t) of the wind that the wind power generator will catch after t seconds is calculated (step 402a). For example, for measuring the direction and velocity of the wind 400 m ahead, if the wind is blowing toward the wind power generator at a velocity of 10 m per second, it is predicted that the wind will arrive at the wind power generator after 40 seconds. Thus the change in direction and velocity of the wind that the wind power generator will utilize in generating an electric power after 40 seconds can be predicted with accuracy. For the purpose of predicting the wind blowing against the wind power generator in the near future on the basis of data on the wind direction and wind velocity of the aerosol 150, it is preferable to prepare preliminarily data base on the measured wind direction and wind velocity of the aerosol 150 as well as on the direction and velocity of actual arrival of wind, and carries out a calculation on the basis of the data base. The process up to this stage is carried out by the laser aerovane, and data on the predicted wind direction, wind velocity, time of arrival, and the like (data including the observations) is sent to the controller 40 through the communication system section 132.

If yaw angle control signals are transmitted from the controller 40 to the yaw angle control drive 50 through the communication system section 70 with an interval of Δt (for example, 1 second), the direction of the wind predicted at a point of time τ, i.e., the optimum yaw angle is shown in the following expression (4).

$$\varphi(\tau+\Delta t), \ \varphi(\tau+2\Delta t), \ \varphi(\tau+3\Delta t), \ \ldots, \ \varphi(\tau+i\Delta t), \ \ldots \ \varphi(\tau+n\Delta t)$$

$$(n = t/\Delta t) \qquad (4)$$

If the current yaw angle is Φ(τ), a yaw angle in the future that can be predicted and controlled is shown in the following expression (5).

$$\Phi(\tau+\Delta t),\ \Phi(\tau+2\Delta t),\ \Phi(\tau+3\Delta t),\ \ldots,\ \Phi(\tau+i\Delta t),\ \ldots\ \Phi(\tau+n\Delta t)$$

$$(n=t/\Delta t)\qquad(5)$$

At this stage, the maximum rotation angular velocity of the yaw angle is ω (for example, 0.7°/sec), and the yaw angle is determined so that conditions of the following expression (6) are satisfied and the value of the following expression (7) becomes the smallest, and thus the yaw angle is optimized (step 403a).

$$\left|\frac{\phi\big(\tau+(i+1)\Delta t\big)-\phi\big(\tau+i\Delta t\big)}{\Delta t}\right|\le\omega\qquad\big(i=0,1,2,\cdots,n-1\big)\qquad\cdots\cdots(6)$$

$$\sum_{i=1}^{n}\left|\psi\big(\tau+i\Delta t\big)-\phi\big(\tau+i\Delta t\big)\right|\qquad\cdots\cdots(7)$$

The yaw angle control signal at the time τ+Δt is transmitted from the controller 40 to the yaw angle control drive 50 (step 404a). When receiving this signal, the yaw angle control drive 50 rotates the nacelle 20 and changes the yaw angle (step 405a). This process is repeated, and thus the yaw angle can be controlled to the optimum. It is also preferable that the yaw angle be predicted and controlled through any other method on the basis of the data on the direction and velocity of wind (observation) obtained from the laser aerovane as a matter of course.

<Pitch angle control>

Now, an example of pitch angle control logic is hereinafter described with reference to (b) of FIG. 4. Step 401 is the same as that for controlling the yaw angle shown in (a) of FIG. 4. On the basis of the yaw angle predicted as described above and the predicted direction and velocity of wind shown in the foregoing expression (4), the direction and velocity of the wind (corresponding to the wind velocity vector [v]) that the blades 10 will catch are accurately predicted as shown in the following expression (8) (step 402b).

$$[v]=\vec{v}$$

$$\vec{v}(\tau+\Delta t),\vec{v}(\tau+2\Delta t),\vec{v}(\tau+3\Delta t),\cdots,\vec{v}(\tau+i\Delta t),\cdots,\vec{v}(\tau+n\Delta t)\qquad\big(n=t/\Delta t\big)\qquad\cdots\cdots(8)$$

Torque per blade 10 (force of a windmill to rotate when the windmill catches a wind power. The unit of torque is [N.m].) is determined depending upon the windmill shaft rotation angular velocity [θ], direction and velocity of the wind (corresponding to the wind velocity vector [v]) caught by the blade 10, and pitch angle α of the blade 10. Accordingly, windmill torque T (τ+iΔt) at the time τ+iΔt can be shown in the following expression (9).

$$[\theta] = \dot{\theta}$$

$$T(\tau + i\Delta t) = \sum_{j-1}^{m} T_j\left(\dot{\theta}(\tau + i\Delta t), v_j(\tau + i\Delta t), \alpha_j(\tau + i\Delta t)\right) \quad \text{(m represents the number of blades)} \quad \cdots \cdots (9)$$

This function Tj ([θ], vj, αj) is measured or simulated in advance so as to be calculated by the controller 40 or the signal processing section 300.

Then, the pitch angle for the t seconds is optimized (step 403b) as described below. At this stage, since the windmill shaft rotation angular velocity [θ] is fixed and the direction and velocity of the wind (corresponding to the wind velocity vector [v]) until the wind is caught by the blades 10 after t seconds are predicted, the optimum pitch angle α' (τ+iΔt) at which the maximum torque is obtained can be calculated at the time τ+iΔt by using the foregoing expression (8). Therefore the optimum pitch angle α' predictable at the time τ can be shown by the following expression (10).

$$\alpha'(\tau + \Delta t), \alpha'(\tau + 2\Delta t), \alpha'(\tau + 3\Delta t), \ldots, \alpha'(\tau + i\Delta t), \ldots \alpha'(\tau + n\Delta t)$$

$$(n = t/\Delta t) \quad \cdots \cdots (10)$$

By establishing that the maximum rotation angular velocity of the pitch angle drive is ωp (for example, 15°/sec) and satisfying the following expression (11), the pitch angle is optimized so that value of the following expression (12) becomes the smallest.

$$\left|\frac{\alpha(\tau + (i+1)\Delta t) - \alpha(\tau + i\Delta t)}{\Delta t}\right| \le \omega_p \qquad (i = 0,1,2,\cdots,n-1) \qquad \cdots \cdots (11)$$

$$\sum_{i=1}^{n}\left|\alpha'(\tau + i\Delta t) - \alpha(\tau + i\Delta t)\right| \qquad (i = 1,2,\cdots,n) \qquad \cdots \cdots (12)$$

The controller 40 transmits the pitch angle control signal of the time τ+Δt to the pitch angle control drive 60 so that the pitch angle becomes the optimum angle α (step 404b) . Upon receipt of this signal, the pitch angle control drive 60 changes the pitch angle (step 405b). In this connection, it is desirable to employ actually measured values (actual data) as the wind direction and wind velocity at the current time τ in the calculation (step 406b). It is also desirable to use a current measured value (actual data) of the pitch angle, which the controller 40 obtains by scanning, as the pitch angle α (τ) at the current time τ (step 407b). This process is repeated for each of the plural (three fliers are used in most cases) blades 10, and thus the pitch angles of all the blades 10 are controlled and optimized. It is a matter of course that it is possible to predict and control the pitch angle through any other method on the basis of the data on the direction and velocity of the wind (the observations) obtained from the laser aerovane.

Effect

In the conventional method of controlling the pitch angles, it is possible to detect that the wind velocity begins to change, but changing the pitch angle negatively affects the performance of blades. Particularly if any change in direction of the wind takes place during change in pitch angle, the change in direction of the wind gives any undesirable influence upon the performance of the blades. Moreover, the mechanical aerovane measures a slipstream, which is the wind that has passed through the blades 10 over above the nacelle 20. Therefore the measurement is greatly influenced by slipstream with an approximately one-second cycle (varying depending upon number of rotations of windmill) after passing the blades 10. Consequently, a pitch angle can be changed only on the basis of an average value for 1 second. Moreover, in the conventional method, there is, for example, any delay in response of machines in actual control, and only passive control with considerable delay is possible.

On the other hand, according to the above procedure, it is possible to carry out positive control of either yaw angle or pitch angle or both yaw angle and pitch angle taking the delay in response of machines into consideration. Thus the blades 10 keep catching the wind at an approximately optimum pitch angle. As a result, it becomes possible to utilize wind power energy continuously with high efficiency as compared with the conventional passive control.

It is also possible to suppress the output by suppressing generation of torque. In this case, suppression of the output is easily attained by arbitrarily setting the optimum pitch angle in the foregoing expression (10) so that torque generation is suppressed. As described above, according to the present invention, it is possible to easily and accurately control the wind power generator.

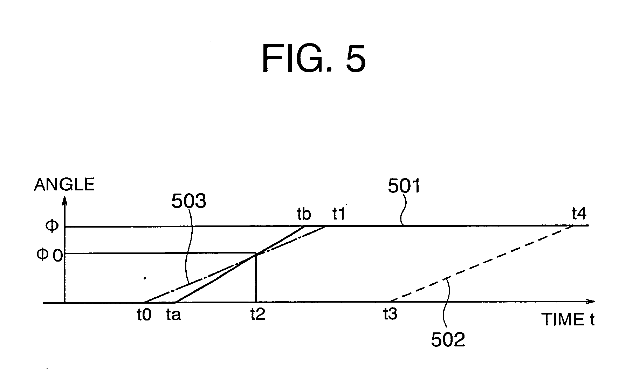

Now, advantages of the above control are hereinafter described with reference to FIG. 5. In FIG. 5, a thick solid line 501 indicates change in the wind actually caught by the wind power generator (actual change in the wind direction). Described below is a case where the direction of the wind has changed by $\Phi$ (for example, $\Phi=21°$) during a period from time ta to time tb (for example, tb-ta=15 seconds).

In the conventional method of controlling a yaw angle, although it is possible to detect that the direction of the wind starts to change at the time ta, the yaw angle is not changed until a change in the wind direction by at least $\Phi0$ (for example, $\Phi0=15°$) has been recognized and such a situation continues for at least a predetermined period (for example, 15 seconds, a period from t2 to t3 in FIG. 5.) as indicated by a broken line 502 (change in yaw angle in the conventional control), which is a passive control as mentioned above. This is because it is necessary to rotate the heavy nacelle 20 part itself in order to change the yaw angle. Accordingly in the case where the yaw angle control drive 50 in FIG. 1 is capable of rotating the nacelle 20 by only approximately 0.7° per second, it takes 30 seconds to rotate the nacelle by 21°, and the wind direction may change during the time period of this 30 seconds. As a result, even if the wind is blowing at approximately 10 meters per second, which is suited for generation of electric power, the delay in yaw angle control brings about a great loss.

On the other hand, according to the present invention, it is possible to carry out positive control as indicated by a thick one-dot chain line 503 (change in yaw angle by making the control of the present invention). In this example, the wind-direction change angular velocity ($\Phi/(tb-ta)$) is equal to or larger than the maximum yaw angle rotation angular velocity ($\Phi/(t1-t0)=0.7°/sec$), and therefore it is not always possible to completely follow the wind. However, the direction and velocity of the wind that the wind power generator will catch, the arriving time of the wind, and the like are predicted on the basis of the data on the wind direction and wind velocity (the observations) obtained by the laser aerovane. Accordingly the yaw angle is controlled so that the propeller (blade) rotation plane may coincide with the predicted wind direction at the predicted time of arrival, and consequently, the blade can keep catching the wind approximately right in front as is understood from FIG. 5. As a result, it is possible to utilize wind power energy continuously and efficiently as compared with the conventional passive control. When the wind-direction change angular velocity is equal to or smaller than the yaw rotation angular velocity, it is possible to completely follow the change in wind direction, and it is possible to more efficiently utilize wind power energy than in the conventional passive control.

According to the present invention, since the optical system section 200 of the laser aerovane operates so as to keep catching the wind right in front together with the nacelle 20, it is also possible to increase the value of the Doppler shift $F_D$. As a result, there is a further advantage of improving accuracy in detecting the direction and velocity of the wind. Although the optical system section 200 of the laser aerovane is arranged on the nacelle 20 by fixing the optical system section 200 to the nacelle 20 in the foregoing example, it is also preferable that any control drive for driving and rotating the optical system section 200 is arranged on the nacelle 20 so that the optical system section 200 is rotated not only by the nacelle 20 but also by such a dedicated control drive. The optical system section 200 may be mounted on the same control drive as the yaw angle control drive 50 on a pole arranged separately from the tower section 2.

Further, although the main body section 100 and the signal processing section 300 are arranged inside the tower section 2 in the foregoing example, it is also preferable that the main body section 100 and the signal processing section 300 be arranged outside the tower section 2. In this arrangement, it is required that communication with other components is kept under good conditions.

<Output control or output fluctuation suppression control of the wind power generation system>

The output control or output fluctuation suppression control of the wind power generation system according to the present invention is hereinafter described in detail. The wind power generation system containing a wind power generator includes: the wind power generator composed of the blades 10, the nacelle 20, the generator 30, the tower section 2, and so on; the laser aerovane (100, 200, 300) for detecting the wind blowing toward the windmill at a point ahead of the windmill; and a control and arithmetic section for predicting output of generated electric power on the basis of predicted values of wind direction and wind velocity calculated by the foregoing laser aerovane and determining a control amount of the output of the generated electric power. (This control and arithmetic section corresponds to, for example, the controller 40. It is also possible to connect and use a separately arranged exclusive arithmetic section). The output-smoothing device 80 for satisfying the control amount is incorporated in the construction, when required. The output-smoothing device 80 is a device connected and arranged outside the wind power generator for smoothing the output, and is further connected to the power cable 82 which, in turn, is connected to the generator 30 through the power converter 81 . Further, as described above, the transformer 83 is arranged on the power cable 82 between the power converter 81 and the electric power system 84 where electric power generated by the wind power generator is outputted.

The output of the wind power generation system is suppressed by, for example, regulating the amount of electric power generated by the wind mill. In this case, yaw control for changing the direction of the windmill and pitch control for changing the angle of the blade are carried out on the basis of prediction data on the wind direction and wind velocity calculated based on the observation of the laser aerovane. Thus, input energy of the wind power itself is controlled, thereby output of the wind power generation system being controlled.

It is necessary to secure a measurement range of the laser aerovane so that there is sufficient time for controlling the system. A distance of approximately 200 m is enough to secure the sufficient time under normal conditions. The rated wind velocity of a wind power generation system is 10 to 20 meters/s in general. Assuming that the direction and velocity of the wind approximately 200 m ahead are grasped, it takes for the wind at least several to several ten seconds to arrive at the windmill, and this period of time is sufficient to control the windmill in advance by predicting the direction and velocity of the wind.

The foregoing description is about a construction in which the system includes a normal type wind power generator 30, and the system is controlled by regulating input energy of the wind power itself. Like control is carried out in the case where the laser aerovane is arranged in the wind power generator provided with a variable-speed generator.

Variable speed generator

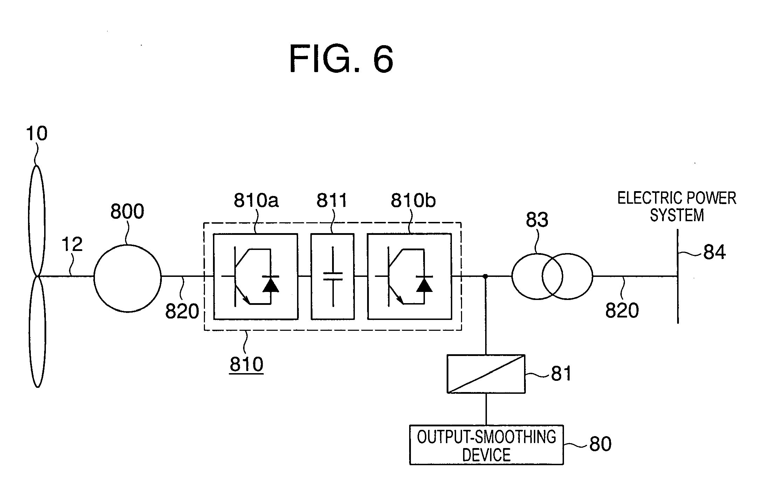

FIG. 6 shows a schematic diagram of the constitution of a variable-speed wind power generation system. This system is provided with a variable-speed generator 800 in place of the foregoing normal type wind power generator 30. The variable-speed generator 800 and a power converter 810 are connected through a power cable 820. The power converter 810 is composed of a generator-side power converter 810a, a direct-current capacitor 811, and a system-side power converter 810b arranged and connected in order from the side near the variable-speed generator 800. Furthermore, the transformer 83 is arranged between the electric power system 84 and the power converter 810, and the output-smoothing device 80 is arranged between the transformer 83 and the power converter 810, when required, through the power converter 81.

The direct-current capacitor 811 controls active power of output of the variable-speed generator 800, and the voltage of this direct-current capacitor rises when the active power flows from the generator-side power converter 810a into the direct-current side. A deviation between this voltage of the direct-current capacitor 811 and a reference direct-current voltage given in advance as a command value is amplified and used as an active current command of the alternating-current side (the system-side power converter 810b side). This active current is increased and controlled and the electric power flows into the system. The detailed construction of the wind power generator is the same as that of the wind power generator provided with the normal type generator 30, and further detailed description is omitted here.

In the variable-speed generator 800, the power converter (810a, 810b) controls the output of the variable-speed generator 800. When a strong wind blows momentarily, energy of the wind power is temporarily stored in the form of mechanical energy as an increase in rotation speed of the variable-speed generator 800. In contrast, when the velocity of wind lowers, rotation energy of the variable-speed generator 800 is converted into electric energy. Accordingly, the variable-speed generator 800 has a characteristic of smoothing the output of the wind power generation system. In other words, it is possible to suppress and control output fluctuation in the wind power generation system.

In the conventional variable-speed wind power generation system, for example, when the velocity of wind lowers for a long time (in minute), the rotation speed (number of rotations) decreases in order to smooth the electrical output in the same manner as in the foregoing case. It is, however, not possible to sufficiently compensate the decrease in the output over a long time, and it is inevitable that the decrease in wind velocity brings about a decrease in output power. In contrast, the preliminary prediction and control according to the present invention makes it possible to predict a decrease in wind velocity in advance and alleviate a decrease in output power, and as a result the output is smoothed. It will be possible to attain variable-speed generation through any other method. It is possible to employ any other method on condition that variable-speed generation is possible.

In the case where the present invention is applied to the mentioned variable-speed-type wind power generation system, the mentioned characteristic of smoothing the electrical output is carried out more effectively. More specifically, in the variable-speed-type wind power generation system, on the basis of the prediction data, if wind power energy to be received in the future is high, electric power is generated as preliminarily planned. Thus the wind power generator stands by at a minimum rotation speed and the wind power energy is stored as mechanical energy to the maximum capacity. On the other hand, if wind power energy to be received in the future is low, rotation energy is converted into electrical energy and outputted as preliminarily planned. As a result, the influence upon the system at every moment is minimized by controlling the number of rotations of the wind power generator and suppressing frequency fluctuation and voltage fluctuation caused by the output of electric power generated by the wind power generation system to be within a regulated range. Thus it becomes possible to make control of smoothing the generated output of the system.

<Wind farm>

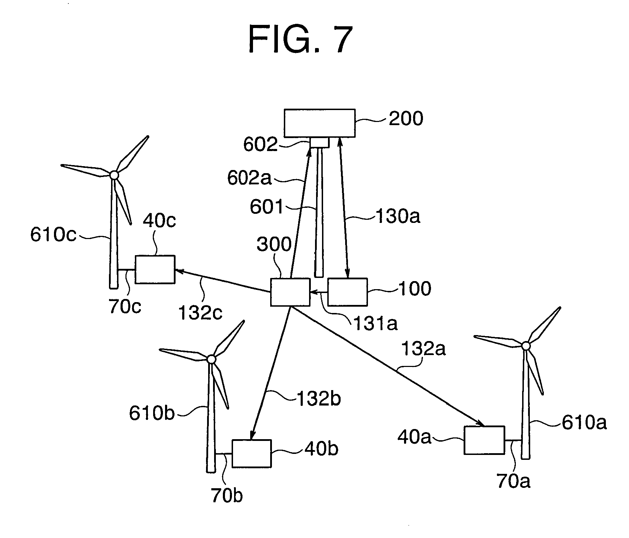

A wind farm according to the present invention is hereinafter described below with reference to FIG. 7. FIG. 7 is a schematic view of the constitution of a wind farm provided with plural wind power generators 610a to 610c. FIG. 7 shows a state that an optical system section 200 of the laser aerovane arranged near the middle of the wind farm. A tower section (pole) 601 is built near the middle of the plural wind power generators 610a to 610c, and the optical system section 200 is mounted on the tower section 601 through an optical system section yaw angle control drive 602 (hereinafter referred to as drive). The optical system section 200 is connected to the main body section 100 through an optical fiber 130a. The main body section 100 and the signal processing section 300 are connected through a communication system section 131a. The signal processing section 300 is connected to controllers 40a to 40c of the wind power generators through communication system sections 132a to 132c respectively. The signal processing section 300 and the drive 602 are connected through a communication system section 602a. The controllers 40a to 40c are connected to the wind power generators 610a to 610c through communication system sections 70a to 70c respectively.

The drive 602 changes the direction of the optical system section 200 on the basis of the output from the signal processing section 300 so that the optical system section 200 may at all times catch the wind right in front. Otherwise the drive 602 causes the optical system section 200 to rotate at a fixed speed so that the direction and velocity of the wind are measured in all circumferential directions. This holds true for the case where the optical system section 200 is mounted on another pole in the single wind power generator described above. It is also preferable that the optical system section 200 and the drive 602 be arranged on the ground in the case where there is almost nothing to obstruct the wind around. The laser aerovane is capable of measuring the direction and velocity of the wind at a convergence point that is arranged X [m] ahead (for example, 400 m ahead) of the most distant wind power generator (corresponding to 610a in the case of FIG. 7) from the tower section 601 or detecting the direction and velocity of the wind at this distance using a pulse-type laser. Furthermore, in addition to the function of processing a signal of the direction and velocity of the wind described above, the signal processing section 300 has a calculation function used in optical system section yaw angle control, calculation function for controlling output of the variable-speed wind power generator in case of using the variable-speed wind power generator, and calculation function used in yaw angle/pitch angle control of each wind power generator.

<Operation of wind farm>

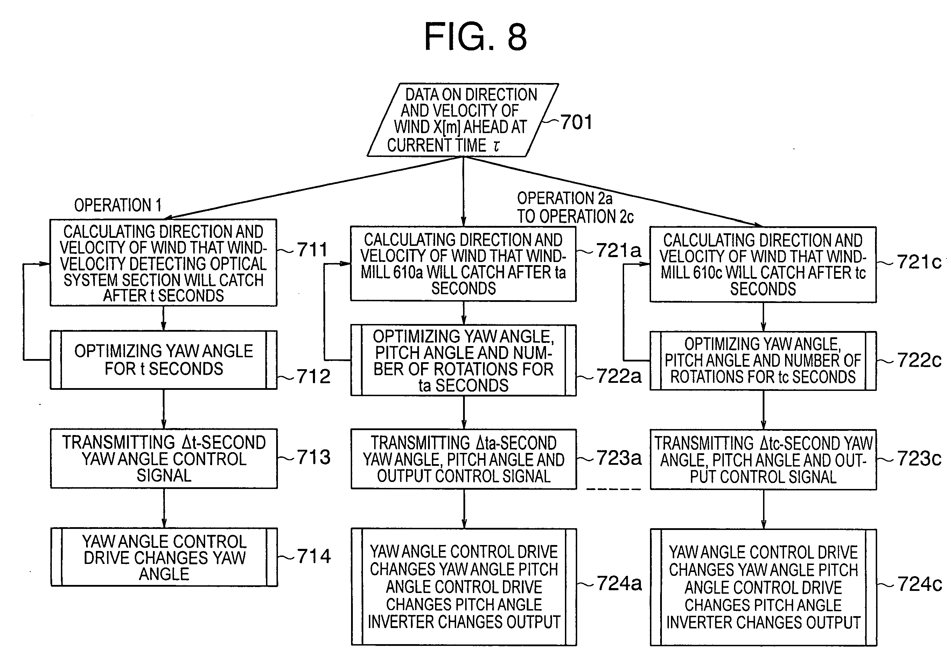

Now, an example of operation logic of the wind farm is hereinafter described with reference to the flowchart in FIG. 8. First, the laser aerovane measures the direction and velocity of the wind at a point X[m] ahead at the current time $\tau$ (step 701). Then, in Operation 1, the direction and velocity of the wind that the optical system section 200 will catch after t seconds are calculated (step 711). A yaw angle is calculated so that the optical system section 200 comes to the optimum yaw angle after t seconds (step 712). A calculated control signal is transmitted to the drive 602 (step 713), and the drive 602 changes the yaw angle on the basis of that signal (step 714). The calculation is carried out in the same manner as that described above. However, in the case of using a drive capable of measuring the direction and velocity of the wind in all circumferential directions by rotating the optical system section 200 at a fixed speed to measure a state of the wind in all circumferential directions, it is not necessary to carry out the above-mentioned yaw control operation of the optical system section 200.

Subsequently, in Operation 2a of the wind power generator 610a, steps 721a to 724a in FIG. 8 are carried out. A memory (not shown) incorporated in the signal processing section 300 stores positions from the laser aerovane, that is, the optical system section 200, to the wind power generators 610a to 610c in vector (in direction and distance), and on the basis of the data, the direction and velocity of the wind that the wind power generator 610a will catch after ta seconds are calculated (step 721a). On the basis of the obtained direction and velocity of the wind, a yaw angle maximum rotation angular velocity $\omega ay$ of the wind power generator 610a, and a pitch maximum rotation angular velocity $\omega ap$, yaw and pitch angles are optimized in the same manner as that described above, and the number of rotations of the windmill is optimized in the case of the variable-speed generator (step 722a). Then, the calculated yaw angle control signal, pitch angle control signal, and generated energy (output) control signal to the variable-speed generator for Δta seconds are transmitted to the controller 40a of the wind power generator 610a (step 723a).

On the basis of those signals, the controller 40a of the wind power generator 610a transmits control signals to the yaw angle control drive, pitch angle control drive, and inverter of the wind power generator 610a. The yaw angle control drive changes the yaw angle, the pitch angle control drive changes the pitch angle, and in the case of the variable-speed generator, the inverter changes the output (step 724a) . Operations 2b and 2c (steps 721a to 724c) of the wind power generators 610b and 610c similar to Operation 2a of the wind power generator 610a are also carried out at the same time. As described above, since Operation 1 of the optical system section 200 and Operations 2a to 2c of the wind power generators 610a to 610c are carried out at the same time, the wind power generators 610a to 610c ef ficiently utilize the wind power energy while measuring the direction and velocity of the wind under optimum conditions.

In addition, when there are many wind power generators or when the wind power generators are arranged over a very wide area, it is preferable that plural laser aerovanes be arranged to assign them the wind power generators to be controlled respectively. Although this signal processing section 300 is provided with the calculation function for optical system section yaw angle control as well as the calculation mechanism for controlling the yaw angle, pitch angles, and output of each wind power generator in this example, it is also preferable that a calculating machine having such calculation function be separately connected to the optical system section 200, a calculating machine section be arranged on each wind power generator 610a to 610c side, or the controller 40 have the calculation function.

In the wind farm as described above, it is possible to mount a laser aerovane on each wind power generator and control the wind power generator as shown in the case of a single wind power generator as a matter of course. As for the control of the wind power generator, other than the above-mentioned prediction control carried out using the data on the current direction and velocity of wind and the data on the state of wind in the near future based on the data on the current direction and velocity of wind, it is also preferable that the wind power generator be controlled by feeding back the data on the state of wind in the past in addition to the data on the current direction and velocity of the wind and calculate the data on the state of the wind in the near future and use them. In the case of controlling the wind power generator by feeding back the data on the state of the wind in the past, the wind power generator is controlled more accurately than the case of not using those pieces of data.

<System arranged by combining wind power generator, laser aerovane, and output-smoothing device together>

The foregoing describes control examples in which rotation energy of the wind power generation system is converted into electrical energy, i.e., generated electric power is transmitted as it is to the system. Next, the case where a system arranged by combining the wind power generator, the laser aerovane, and the output-smoothing device together is employed as a wind power generation system is described. In the present invention, an output adjustment amount of the wind power generator is calculated in advance on the basis of the wind-state prediction data obtained by the laser aerovane, and then on the basis of the calculated conditions, the output-smoothing device stores dump power otherwise releases stored energy when electric power generated by the wind power is insufficient. The same output-smoothing device is operated so that fluctuation is suppressed up to a level at which the existing power generation system of the system can follow, and the generated power of the entire system is stabilized (smoothed).

The output-smoothing device combined with the wind power generator is, for example, a storage battery, an NAS battery, a redox-flow battery, an electric double layer capacitor, a reactive power compensator (static var compensator), or an output-limiting resistor. It is also possible to use any means as the output-smoothing device on condition that the means can conduct frequent and repeated storing and releasing of electric energy. The output-smoothing device carries out output control so that output fluctuation of the wind power generation system is cancelled at the moment when the wind observed by the laser aerovane has arrived at the wind power generator. The storage battery is mainly composed of a large-size direct-current battery and a rectifier.

The reactive power compensator is equipment used in the case where wind power generation equipment is connected to an electric power system as countermeasure to counter voltage fluctuation and flickers (for preventing flicker) of the electric power system. In wind power generation, the wind necessary for generation of electric power may suddenly change, and therefore output of the wind power generator causes voltage fluctuation in the system, and generates any abnormal stop or error in other apparatus, flickers in illuminator, or the like. Therefore, the reactive power compensator may be required as countermeasure to counter those troubles.

The output-limiting resistor limits and suppresses fluctuation in the wind power generator output due to change in windvelocity. When the wind power generator output exceeds a certain value owing to change in wind velocity, the excess is consumed as heat in the resistor, thereby limiting the output, and an electric power within a predetermined value is sent to the system.

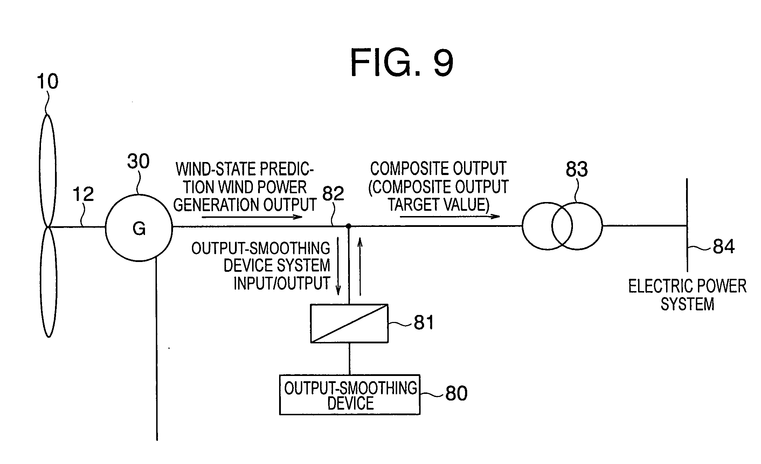

As a specific example, output smoothing in the wind power generation system formed by combining the above-mentioned wind power generation wind-state prediction output control device (i.e.,device for determining various control amounts on the basis of data obtained by the laser aerovane) with the output-smoothing device 80 is hereinafter described with reference to FIG. 9. As shown in FIG. 9, the generator 30 and the electric power system 84 installed in the wind power generator are connected through the power cable 82, and the output-smoothing device 80 is connected to the power cable 82 through the power converter 81. The transformer 83 is arranged between the power converter 81 and the electric power system 84.

As described above, output control based on wind-state prediction of wind power generation greatly smoothes fluctuation in windmill output due to change in the state of wind, which is a disadvantage of the conventional wind power generation equipment (stabilizes the output). To cope with this, by using the output-smoothing device 80 and the output converter 81 in addition to this output control, it becomes possible to suppress fluctuation in the wind power generator output sent to the electric power system 84 and particularly to minimize frequency fluctuation in the interfaced electric power system 84.

An output fluctuation smoothing system (including the wind power generation wind-state prediction output control device, the power converter 81, and the output-smoothing device 80) predicts a state of wind and predicts a wind power generation output, thereby the electric power input/output amount of the output-smoothing device 80 being predicted and controlled. Accordingly, output fluctuation in the entire wind power generation system is suppressed or completely smoothed without difficulty and, as a result, it is possible to stably supply electric power by means of the wind power generator.

In the present invention, in combination with either a wind power generator capable of controlling a pitch angle and/or yaw angle or a wind power generator not capable of controlling a pitch angle and/or yaw angle, the direction and velocity of wind that the wind power generators will catch after a certain time (for example, after 40 seconds) are predicted on the basis of the signal from the laser aerovane and the laser aerovane for measuring the direction and velocity of the wind ahead of (for example, 400 m ahead of) the wind power generator with high accuracy and high resolution, and the electric power input/output of the output-smoothing device 80 is optimized in terms of canceling increase or a decrease in the output generated by the wind power generator.

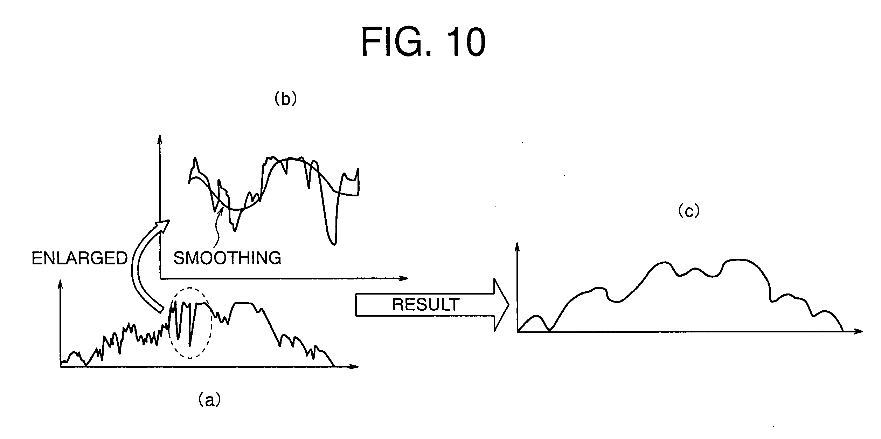

When carrying out this control, fluctuation in the output is suppressed as shown in FIG. 10. The amount of electric power generated by the wind power generator fluctuates largely as shown in (a) of FIG. 10 when the output control is not carried out. However, since the amount of generated electric power in the near future can be predicted as shown in (b) of FIG. 10, the output-smoothing device repeats charging and discharging electric energy of the windmill output due to fluctuation in wind velocity, whereby output fluctuation is suppressed as indicated by a smoothed curve in (b) of FIG. 10. As a result, an output to the system becomes as shown in (c) of FIG. 10, and the electric power does not sharply change, and thus it is possible to greatly reduce an influence on the electric power system 84.

In the case where the capacity of the output-smoothing device 80 is sufficiently large, it is possible to completely smooth the output power of the wind power generator. Consequently, it is possible to interlock the wind power generators without influence on the electric power system 84.

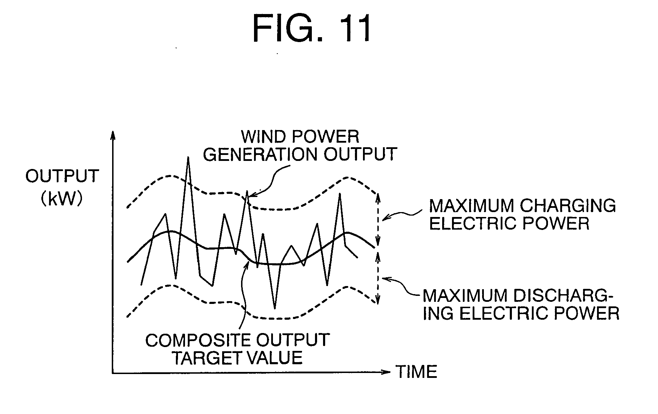

As shown in FIG. 11, when an average value of the wind power generation output during a certain period is established as a composite output target value of the wind power generator and the output-smoothing device 80 and if the wind power generation output is larger than the composite output target value, the difference is charged into a storage battery or the like. On the other hand, if the wind power generation output is smaller than the composite output target value, the difference is discharged from the storage battery or the like. The maximum charge electric power and the maximum discharge electric power are established to be certain values as show in FIG. 11. Broken lines indicate limit values of charge and discharge respectively. By carrying out the charge and discharge with respect to the storage battery or the like within the limited scope, it becomes possible to attain the composite output target value. According to the present invention, the output of the wind power generator is predicted, and it is now possible to smooth minute fluctuation in electric power having been unable to smooth by any conventional method for conditions satisfying the target value of a generated output. Fluctuation in electric power is smoothed, for example, as shown in (c) of FIG. 10. In the arrangement shown in FIG. 9, it is also preferable to utilize a conventional output-smoothing device or positively use an output-smoothing function provided by a load as the output-smoothing device 80.

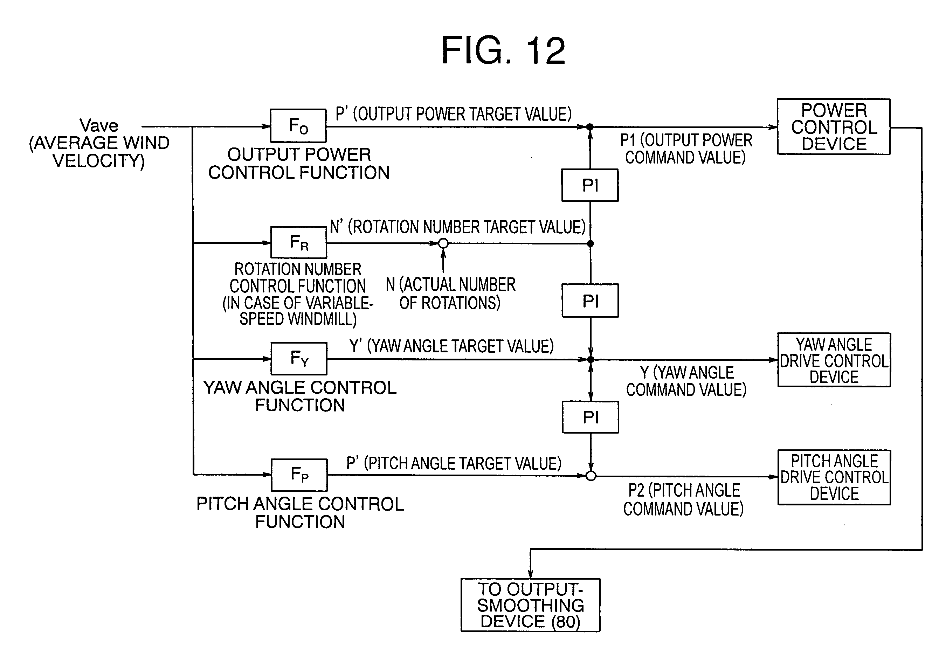

FIG. 12 shows a block diagram showing an example of control of the wind power generation system. On the basis of the observation of the laser aerovane, an average wind velocity Vave of the wind blowing toward the windmill is applied to a power control function $F_O$, or applied to a rotation number control function $F_R$, a yaw control function $F_Y$, and a pitch angle control function $F_P$ in case of using the variable-speed windmill. Thus, an output power command value P1, a yaw command value Y, and a pitch angle command value P2 are calculated. Then on the basis of the calculated conditions, the electric power input/output amount of the output-smoothing device 80 is adjusted, and the yaw angle control drive 50 and the pitch angle control drive 60 are driven. In FIG. 12, in the wind power generation equipment, control items such as output power control, rotation number control, yaw angle control, and pitch angle control are controlled in order to, for example, stabilize the generated electric power and improve efficiency in a low wind-velocity range. A command value being the composite output target value of the wind power generation output is sent from a device for controlling output power (for example, the controller 40 or any other device equivalent to the controller 40 in function) to the output-smoothing device 80 and is used as an input/output signal of the output-smoothing device 80.

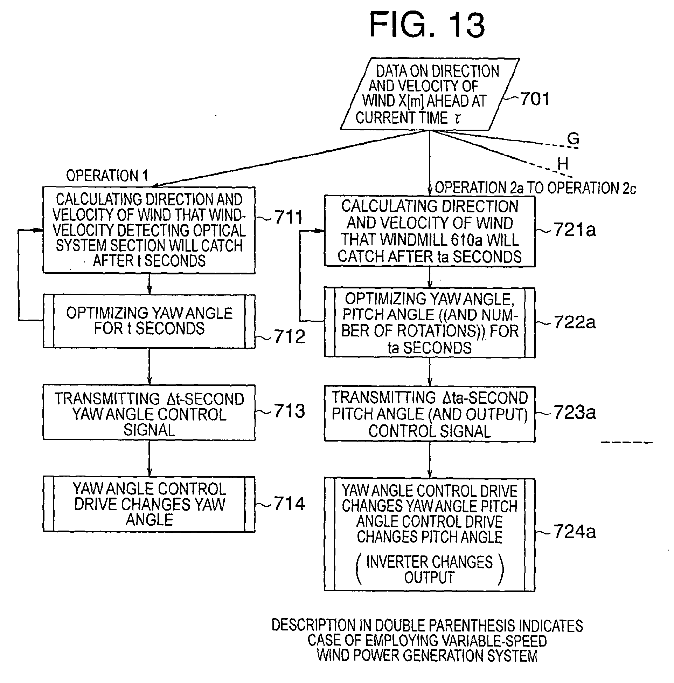

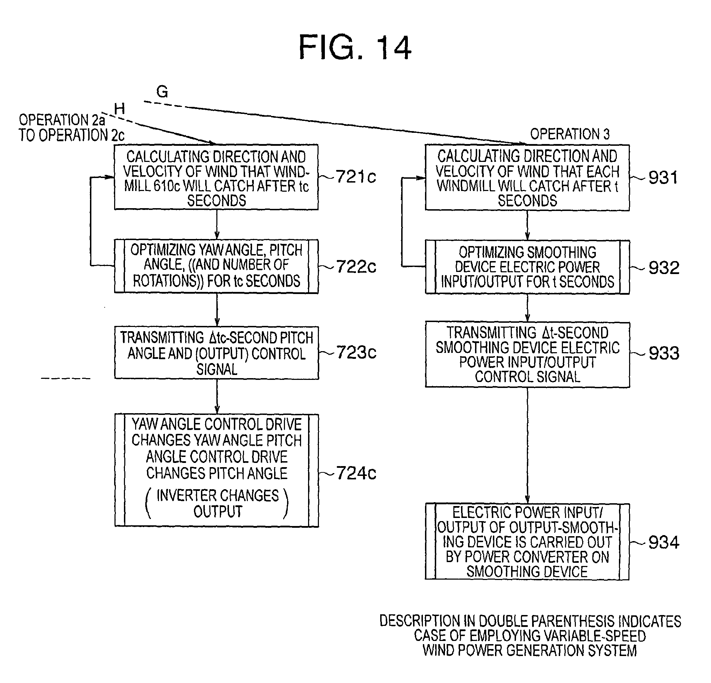

Now, an operation flow in the case of combining the wind power generators and the output-smoothing device 80 is hereinafter described with reference to FIGS. 13 and 14, taking the wind power generation system in the wind farm shown in FIG. 7 as an example. Note that reference characters G and H in FIG. 13 are connected to reference characters G and H in FIG. 14 respectively, and FIG. 13 and FIG. 14 are joined to form one flowchart. The operation from step 701 to step 724a (including operation 1 and operations 2a to 2c) in FIGS. 13 and 14 is described in a second embodiment, and further description thereof is omitted here.

The output-smoothing device 80 carries out Operation 3 from step 931 to step 934 in FIG. 14. The signal processing section 300 stores a position from the laser aerovane to each wind power generator in the form of a vector, and calculates the direction and velocity of the wind that each wind power generator will catch after t seconds on the basis of the measurement of the laser aerovane and the foregoing position data (step 931). The signal processing section 300 calculates the amount of the electric power generated by each wind power generator for t seconds in the near future on the basis of the direction and velocity of the wind that the wind power generator will catch in the near future, and this amount is used to optimize the electric power input/output amount of the output-smoothing device 80 for t seconds (step 932). The electric power input/output amount is optimized in the same manner as that described above. At this stage, the output of the wind power generators is a total amount of electric power generated by all of the wind power generators.

The signal processing section 300 sends control signals to the power converter 81 so that the actual electric power input/output of the output-smoothing device 80 coincides with this calculated optimum value (step 933). On the basis of those control signals, the power converter 81 carries out the electric power input/output of the output-smoothing device 80, and fluctuation in electric power of the system due to the electric power generated by the wind power generators is suppressed (step 934) . Those operations are carried out and repeated, and thus output fluctuation in the wind power generation system is suppressed and controlled as shown in (c) of FIG. 10.

<Hybrid power generation system>

In the case of the wind power generation system (hybrid power generation system) obtained by connecting to the same electric power system 84 a wind power generator and any electric power generating means (see, for example, 89 in FIG. 1), the output of the wind power generator is predicted on the basis of data obtained from the laser aerovane, which makes it possible to predict a control amount of the wind power generator as well as a control amount of the means for generating electric power. As a result, it is possible to smooth the output of the entire system. In this manner, the mentioned wind-state prediction is utilized also in operating various control devices of the electric power generating means using any energy other than wind power for power generation. Thus output-smoothing control of the entire system can be carried out more efficiently.

Examples of the electric power generating means other than the wind power generator include a diesel generator, storage battery, solar generator, and variable-speed pump. Combining a load with this hybrid power generation system enables the output smoothing to be carried out more efficiently.

First Embodiment

(Evaluation of benefits obtained by predictive control of wind power generator using laser aerovane)

Next, an evaluation of benefits of increasing the output or smoothing the output by the use of the predictive control technique using a laser aerovane will be described. A party who has the predictive control technique using a laser aerovane rents the predictive control system using a laser aerovane to the owner of a wind power generation system or to a party who is in charge of running the wind power generation system.

Control of yaw angle

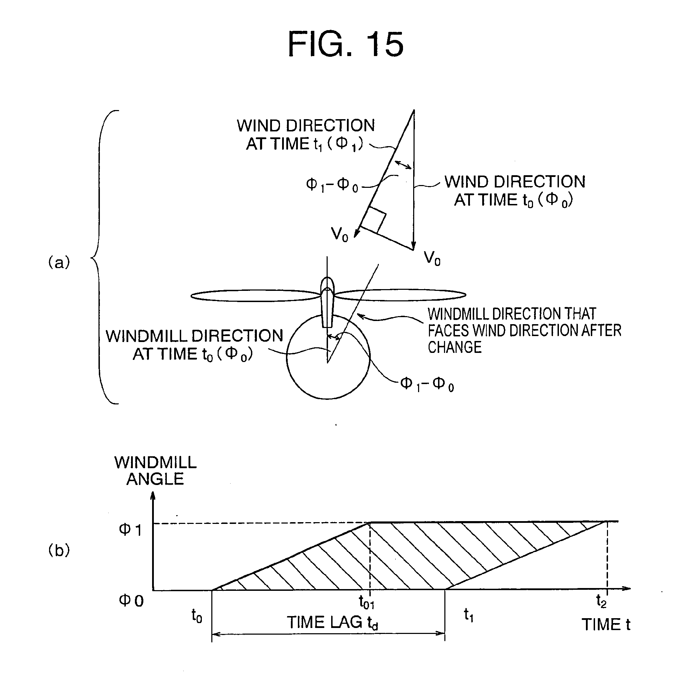

FIG. 15 conceptually illustrates a difference about yaw angle control between the amount of power generated in the absence of a laser aerovane and the amount of power generated in the presence of a laser aerovane. The (a) of FIG. 15 shows the relation between a change of the wind direction and the direction of the windmill, and (b) of FIG. 15 shows the time chart. In FIG. 15, as has been described with FIG. 5, the use of the predictive control enables the nacelle 20 to quickly follow the change of the wind direction. For example, suppose, before time to, the windmill is directed right toward the wind, with the direction of the windmill being $\Phi_0$. Also, suppose, in this condition, the wind direction changes to $\Phi_1$ at time to, with the velocity of the wind, $V_0$, remaining unchanged. Then, in the absence of the predictive control, the windmill begins to change its direction from $\Phi_0$ to $\Phi_1$ to follow the change of the wind direction after a time delay $t_d$ including a delay of yaw control (the time that the wind power generation system requires to begin control to the direction $\Phi_1$ after the wind has changed its direction), i.e., the windmill begins to change its direction at time $t_1$ (= $t_0$ + $t_d$). Then,

if the wind quickly changes its direction, the direction of the wind may have already further changed when the windmill beings to move from $\Phi_0$ to $\Phi_1$ at time $t_1$.

In contrast, when the change of the wind direction can be predicted, the yaw control can be started at time to and so the direction of the windmill can be quickly adjusted to $\Phi_1$.

While the hatched portion in (b) of FIG. 15 shows the effect obtained by the provision of the laser aerovane, the amount of increase of the electric power for sale, $\Delta P$, corresponding to the hatched portion, is calculated by the expression (13) below:

$$\Delta P = \int_{t0}^{t2} P\left(f(t)^2 - g(t)^2\right)dt \qquad (13)$$

Where, P: with the wind velocity remaining unchanged from time to to time $t_2$, P represents the output of the wind power generation system corresponding to that wind velocity.

$t_0 \leq t < t_{01}$          $f(t) = \cos (\Phi_1 - \Phi_0 - (\Phi_1 - \Phi_0)(t - t_0) / (t_{01} - t_0))$

$g(t) = \cos (\Phi_1 - \Phi_0)$

$t_{01} \leq t < t_1$          $f(t) = \cos (0)$

$g(t) = \cos (\Phi_1 - \Phi_0)$

$t_1 \leq t < t_2$          $f(t) = \cos (0)$

$g(t) = \cos (\Phi_1 - \Phi_0 - (\Phi_1 - \Phi_0)(t - t_1) / (t_2 - t_1))$

The service provider who rents and installs the predictive control system using a laser aerovane and the user of the service who joins the service and borrows the system (e.g., the owner or administrator of the wind power generation system) share the profit of the increased amount of power for sale, $\Delta P$, obtained during the total running period, or an additional value obtained, e.g., by an improvement of an environmental influence, such as $CO_2$ reduction.

Control of pitch angle

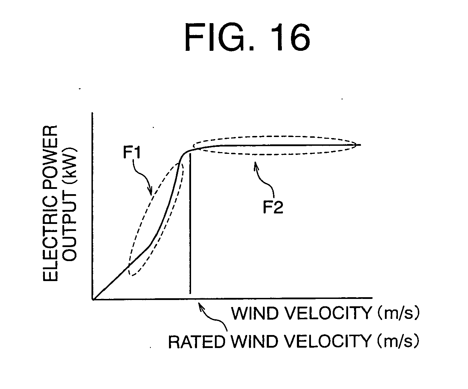

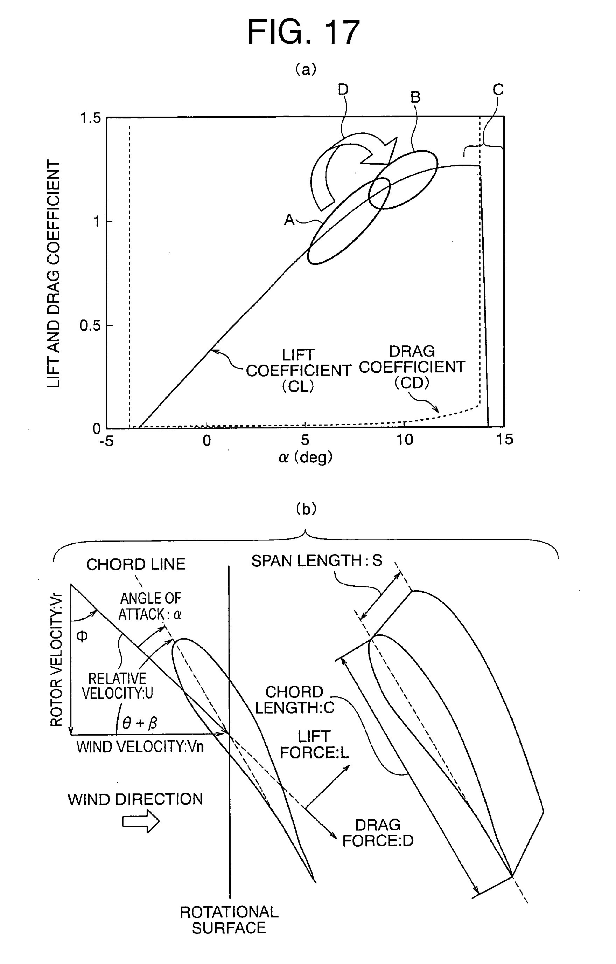

The pitch control will be described which produces another effect of increasing the output. FIG. 16 shows a wind power generator's output power characteristic with respect to the wind velocity (referred to as a windmill performance curve), which is prepared for each wind power generator. Usually, the pitch angle is fixed in the wind-velocity region below the rated output (below the rated wind velocity shown in FIG. 16). FIG. 16 shows this portion as F1. The portion F2 in FIG. 16 is a pitch-variable region. By predicting the wind velocity in the portion below the rated output, control can be provided to previously give a pitch angle corresponding to the maximum efficiency operation at the coming wind velocity, which increases the generated power output. In general, the generated torque of a blade is proportional to the lift coefficient shown in (a) of FIG. 17. Therefore, the relation below holds.

Generated power output ∝ Generated torque ∝ Lift coefficient

As shown in (b) of FIG. 17, the lift coefficient is determined by the pitch angle of the blade 10, and the angle of attack ($\alpha$) corresponding to the angular difference between the angle of the chord line and the angle of the relative velocity U of the rotor velocity Vr and the wind velocity Vn. The rotor velocity Vr is the speed at which the rotary shaft 12 rotates. As shown in (a) of FIG. 17, because of the presence of the blade burble region C, a conventional operation is performed with the lift coefficient CL in the running region A, allowing a margin from the maximum value of the lift coefficient. Then, by predicting the wind velocity and the number of rotations and controlling the pitch angle so that the angle of attack allows generation of the maximum torque, the generated torque can be improved so as to enable a highly efficient operation. That is, in (a) of FIG. 17, the running region can be shifted to the running region B closer to the burble region C, so as to set the lift coefficient higher, and thus to enhance the output of the wind power generation system. With such operation, as a result of the increased lift coefficient, the windmill characteristic exhibits the effect of increasing the output in the direction shown by the arrow D in (a) of FIG. 17. The combination of the yaw angle control and the pitch angle control will produce an effect of increasing the output by several percent in total. The effect of increasing the output is evaluated as below.

Comparison and evaluation of generated power

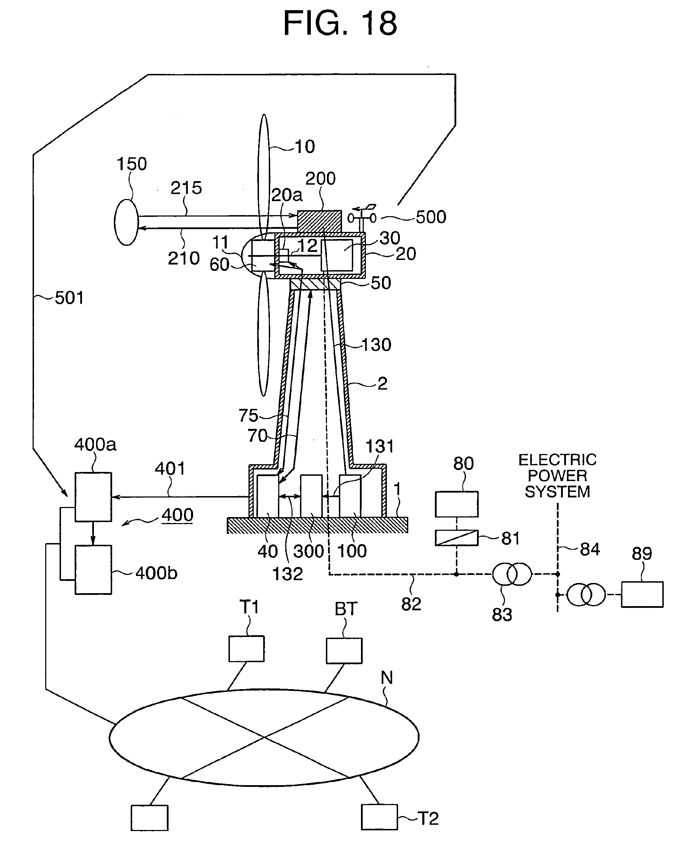

FIG. 18 shows a wind power generator of a wind power generation system according to the present invention which has a portion that performs comparison and evaluation of generated power in the presence and absence of a laser aerovane. As compared with that shown in FIG. 1, the wind power generator includes a wind power generation output calculation section 400a that makes comparison and evaluation of generated power in the presence/absence of a laser aerovane, and a wind-cone aerovane 500 provided on the conventional nacelle 20. Input information 401 given to the wind power generation output calculation section 400a includes data about the wind direction and velocity obtained by the laser aerovane, the time at which yaw angle control with the laser aerovane is started, and the amount of pitch angle change based on wind-velocity measurements by the laser aerovane. Also, input information 501 includes data about the wind direction and velocity obtained by the wind-cone aerovane 500. On the basis of the input information 501, the wind power generation output calculation section 400a determines the time at which yaw angle control with the wind-cone aerovane 500 is started and the amount of pitch angle change based on the wind-velocity measurements by the wind-cone aerovane 500. As mentioned above, in the conventional method, the pitch angle is kept fixed below the rated velocity.

The difference between the amounts of generated power in the presence and absence of the laser aerovane is determined as below. For example, the wind power generation output calculation section 400a shown in FIG. 18, which includes a computer and memory, contains in its memory (not shown) a windmill characteristic, as shown in FIG. 16, as a function in the form of wind velocity versus output power. The evaluation of windmill output is made on the basis of a reference time immediately after the beginning of the operation and the time elapsed thereafter. In the evaluation, the nacelle direction and the pitch angle move differently between the presence and absence of the laser aerovane. Therefore, the output generated after the time immediately after the beginning of the operation (after the reference time) in the absence of the laser aerovane is evaluated by simulation. That is, the evaluation about the wind-cone aerovane 500 is made by setting virtual movement of the windmill after the reference time on the basis of the data from the wind-cone aerovane 500, so as to simulate the output.

Now, with the wind velocity and direction obtained by the wind-cone aerovane 500, the movement of the windmill direction, which would be made on the basis of the data, is obtained by simulation, and wind-velocity vector components corresponding to the directions are obtained, and the components are used as the wind velocity in virtually obtaining the output of the windmill.

The evaluation about the laser aerovane, too, uses the windmill characteristic shown in FIG. 16, in order to obtain the same evaluation accuracy as that obtained with the wind-cone aerovane. That is, the wind velocity obtained as measured data is given on the horizontal axis in FIG. 16 and the output power is read from the vertical axis in FIG. 16 to make an evaluation. While, in the presence of the laser aerovane, it is necessary to give the pitch angle as a parameter below the rated wind velocity, a windmill characteristic function is prepared for each pitch angle.

The output power evaluation is continued until the windmill stops and the difference between the amounts of output power is obtained, whereby a comparison is made between the amounts of power obtained in the presence and absence of the laser aerovane. When a difference in output power between the simulation and real operation is not negligible, the results of simulation may be corrected to adjust to the output of real operation. Preferably, the evaluation is made by collecting results obtained continuously for a given period (one day, one week, one month, or one year). The wind power generation output calculation section 400a shown in FIG. 18 has an algorithm for performing the calculations and evaluations described so far.

While the discussion above has described a method in which the presence and absence of predictive control are evaluated by simulation, real outputs may be directly compared and evaluated using a wind power generation system having a laser aerovane and a wind power generation system having no laser aerovane, on condition of the same machine type and the same capacity. In particular, with a wind farm including a plurality of windmills as shown in FIG. 7, windmills located close to each other are selected, and the amounts of power generated by the windmills are directly compared to obtain the difference, with one wind power generation system equipped with a laser aerovane and the other not equipped with a laser aerovane.

Evaluation of additional value produced by environmental improvement

An evaluation of additional value produced by an environmental improvement, e.g., $CO_2$ reduction, with the use of the predictive control of a wind power generator using a laser aerovane will be described. In the evaluation, while the wind power generation output calculation section 400a shown in FIG. 18 obtains a difference between the amounts of output power in the presence and absence of a laser aerovane, an additional value calculation section 400b connected to the wind power generation output calculation section 400a obtains the amount of $CO_2$ that would be produced, e.g., by a Diesel-engine generator, when the difference between the amounts of output power is compensated for by the Diesel-engine generator. The additional value calculation section 400b contains, in its memory, a table indicating a relation between the amount of output power of the Diesel-engine generator and the amount of generated $CO_2$, and a table indicating a relation between the amount of generated $CO_2$ and an index representing an influence exerted on the environment (neither table is shown), where the additional value calculation section 400b obtains, from the tables, the amount of generated $CO_2$ and an index value indicating the influence on the environment. The wind power generation output calculation section 400a and the additional value calculation section 400b may be constructed as one unit as an evaluation calculation section 400.

The evaluation calculation section 400 may be connected to a network N, e.g., the Internet, so that the service provider and the user of the service can use the evaluation information calculated by the evaluation calculation section 400 from their respective network terminals T1 and T2. In this case, the evaluation calculation section 400 serves as one node (terminal) of the network. Furthermore, on the network N, the system may be constructed so that a part (a previously contracted percentage) of the increase of profits of the user of the service, based on the evaluation information, is automatically transferred from the user of the service to the service provider through a terminal BT of a banking system. In this case, the evaluation calculation section 400 previously contains a unit value of profit (a profit per given unit) about each piece of evaluation information (the increase in power for sale, the index of environmental influence) and a percentage of share of the profits that is given to the service provider. Then, on the basis of the unit values of profits and the percentage of share, the evaluation calculation section 400 obtains the total profits and obtains the share of the total profits that is given to the service provider, which is automatically transferred through the terminal BT of the banking system.

Second Embodiment

<Effective use of electric power through predictive control of wind power generator using laser aerovane>

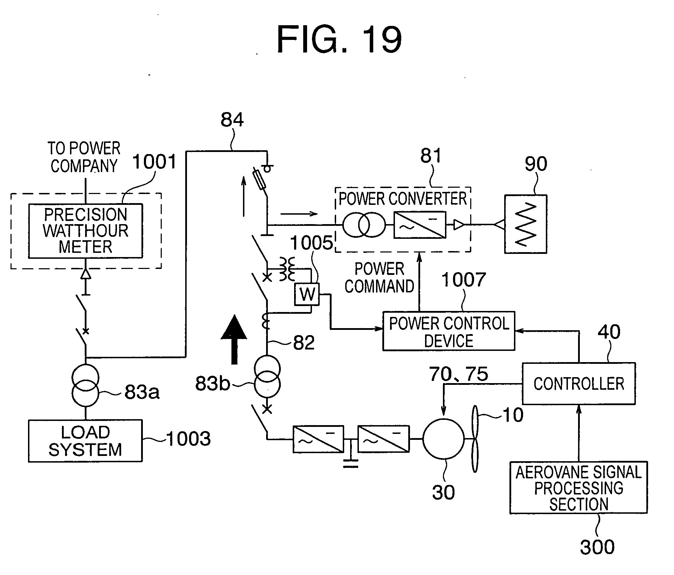

FIG. 19 schematically shows another configuration of the wind power generation system according to the present invention. In FIG. 19, the system includes a resistor or a power absorbing device 90 that is connected through a power converter 81 to the electric-power-system-side output end of the wind power generation system. The power converter 81 is controlled by power instructions given from a power controller 1007 on the basis of signals from the aerovane signal processing section 300 and the controller 40 of the wind power generator shown as the generator 30 and the blades 10, and signals from a wattmeter 1005 provided on the power cable 82. The electric power system 84 is connected to load equipment 1003 through the transformer 83a and to a power company through a precision watthour meter 1001. In order to restrict output fluctuations within limits that the electric power system permits, the resistor (or power absorbing device) 90 has a function of releasing electric power energy over the acceptable range as heat to the atmosphere, or of storing electric power energy as energy of some form.

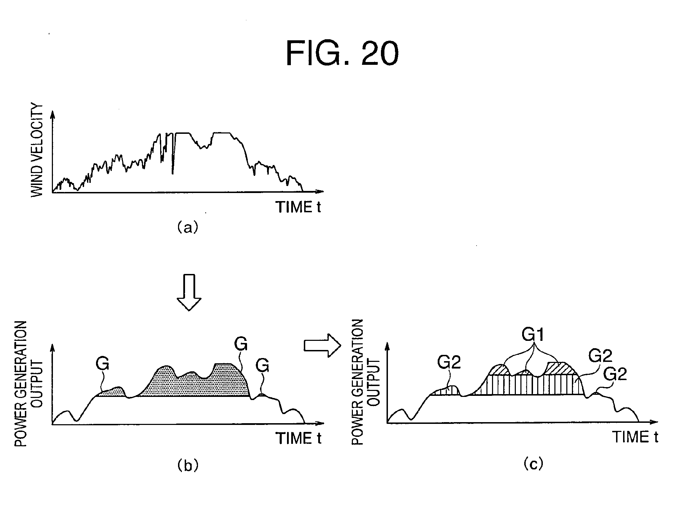

An example of the control of the output of the wind power generation system will be described referring to FIG. 20. The (a) of FIG. 20 shows a wind velocity variation in time and (b) of FIG. 20 shows an output generated with the wind velocity of (a) in FIG. 20 in the absence of the predictive control. When the output shown by the curve of (b) in FIG. 20 may adversely affect the electric power system, the output limit range must be set while allowing a margin, in which case, for example, the portions shown with G in (b) of FIG. 20 are subjected to limiting of the windmill output, or to suppressing of the output by consuming the power as heat using a load like the resistor 90 or by temporarily storing the energy by some means. This inevitably results in considerable amounts of output restriction.

In contrast, the predictive control using a laser aerovane is capable of predicting, as a specific output scale, the portions that would cause overproduction in the absence of control, and is also capable of providing feed-forward control to judge whether the system permits the amounts or to suppress the variations within the limits permitted by the system, whereby the output-limited or output-suppressed portions are kept within a smaller range. The (c) of FIG. 20 shows, with G2, the portions that are made utilizable as the output by the prediction and the removal of output limitations and suppression. While (c) of FIG. 20 also shows the output-limited or -suppressed portions G1, those portions are smaller than the portions G shown in (b) of FIG. 20. As a result, it is possible to effectively utilize the portions G2 that would not be utilizable in conventional systems, and the service provider and the user of the service can share the benefits (e.g., an increased profit) produced by the effective utilization.

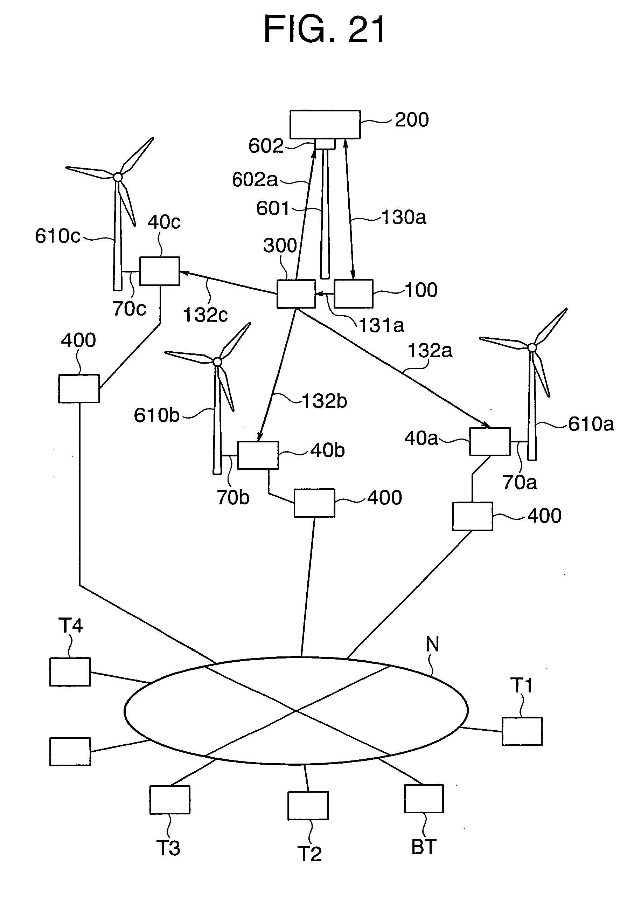

The effects shown in FIGS. 15, 16, and 20 are expectable regardless of whether the system uses a single wind power generator or a plurality of wind power generators, where, in the latter case, as shown in FIG. 21, a plurality of wind power generators 610a to 610c share a single laser aerovane including the main body section 100, the optical system section 200, and the signal processing section 300. Each of the wind power generators 610a to 610c is provided with the evaluation calculation section 400 described above. Each evaluation calculation section 400 may be connected to the network N, e.g., the Internet, so that the service provider and a plurality of users of the service can utilize, from network terminals T1 to T4, the evaluation information calculated by the evaluation calculation sections 400. In this case, the evaluation calculation section 400 serves as a single node (terminal) of the network. Furthermore, on the network N, the system may be constructed so that a part (a previously contracted percentage) of the increase of profits of the user of the service, based on the evaluation information, is automatically transferred from the user of the service to the service provider through a terminal BT of a banking system. In this case, the evaluation calculation section 400 previously contains a unit value of profit (a profit per given unit) about each piece of evaluation information (an increase in power for sale, an index of environmental influence) and a percentage of share of the profits that is given to the service provider. Then, on the basis of the unit values of profits and the percentage of share, the evaluation calculation section 400 obtains the total profits and obtains the share of the total profits that is given to the service provider, which is automatically transferred through the banking terminal BT. A laser aerovane may be provided for each wind power generator as shown in FIG. 18.

Third Embodiment

<Predictive control of wind power generator using laser aerovane in hybrid power generation system>

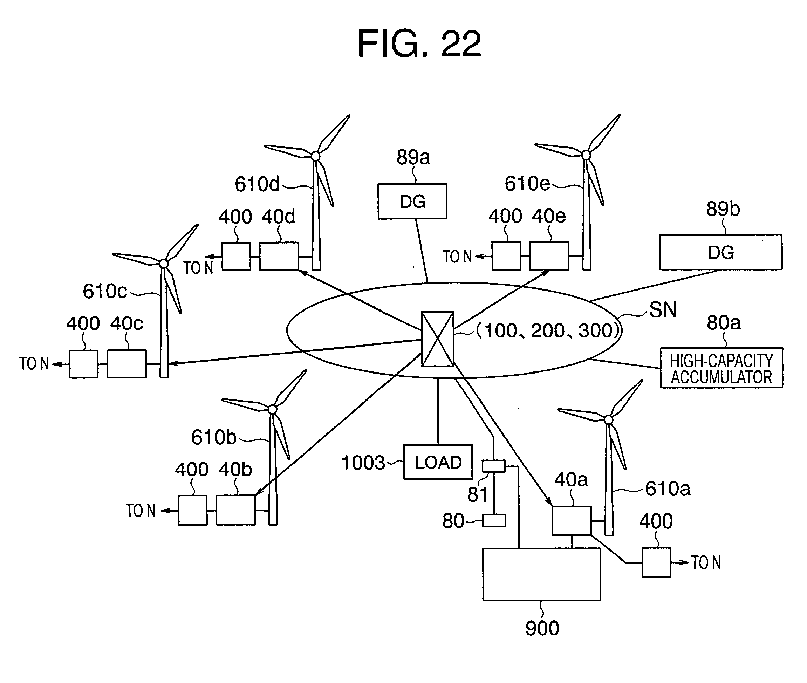

FIG. 22 illustrates the configuration of an application of the present invention to a hybrid power generation system in a weak system, e.g., on an isolated island. In the example of a hybrid power generation system shown in FIG. 22, a combination of wind power generators 610a to 610e, Diesel-engine power generators (DGs) 89a and 89b, a large-capacity storage battery 80a, a storage battery 80, and a load 1003 is connected to an electric power system network SN. Each of the wind power generators 610a to 610e is equipped with an evaluation calculation section 400, and the evaluation calculation sections 400 are connected to a network N as shown in FIG. 21. The network N, e.g., the Internet, is not shown in FIG. 22. The evaluation calculation sections 400 may be connected to the network through communication. Data from the laser aerovane (100, 200, and 300) may also be transferred through communication.

The output of the wind power generation system is predicted on the basis of the data obtained from the laser aerovane (100, 200, and 300), and the system is operated in cooperation with the large-capacity storage battery 80a and the storage battery 80, so that the output of the wind power generation system can be smoothed to a level that the governor control of the Diesel-engine generators 89a and 89b can follow.

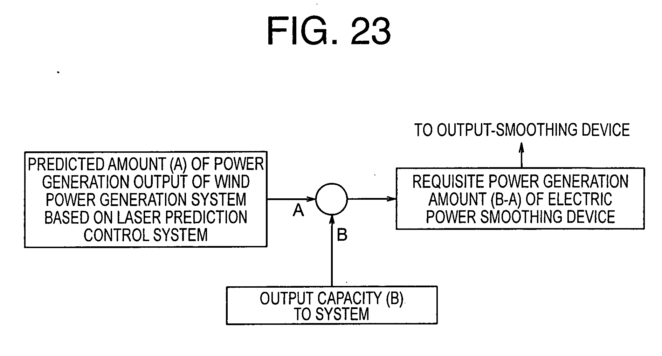

This is shown in FIG. 23. As has been described referring to FIG. 10, electric power generated by a real wind power generation system largely fluctuates as shown in (a) of FIG. 10. However, since the amount of power generated in the near future can be predicted as shown in (b) of FIG. 10, the fluctuations of the output power from the windmill caused by short-term wind-velocity variations can be suppressed as shown by the smoothed curve of (b) in FIG. 10 by causing the output-smoothing device 80 to repeatedly charge and discharge. Thus, the output to the system is as shown in (c) of FIG. 10, where rapid power fluctuations have been removed to considerably reduce an influence on the electric power system. Then, as shown in FIG. 23, relatively long-term output fluctuations of the wind power generation system are predicted by the use of the laser aerovane (the predicted amount is denoted as A), the output of the Diesel-engine generators is controlled so that the output fluctuations are smoothed to a level (B) that the system permits (the amount of output is B-A), and the output generated by the wind power generation system and the power-smoothing output (B-A) are finally combined to obtain a smooth output waveform that meets system conditions.

Relatively short-term fluctuations (sharp fluctuations as shown in FIG. 10) are smoothed by the storage batteries 80 and 80a or by other means as shown below. That is, sharp fluctuations may be smoothed by using any devices each having an electric power storing and releasing function, such as NAS batteries, Redox Flow batteries, flywheels, or electric double-layer capacitors, as well as ordinary storage batteries.

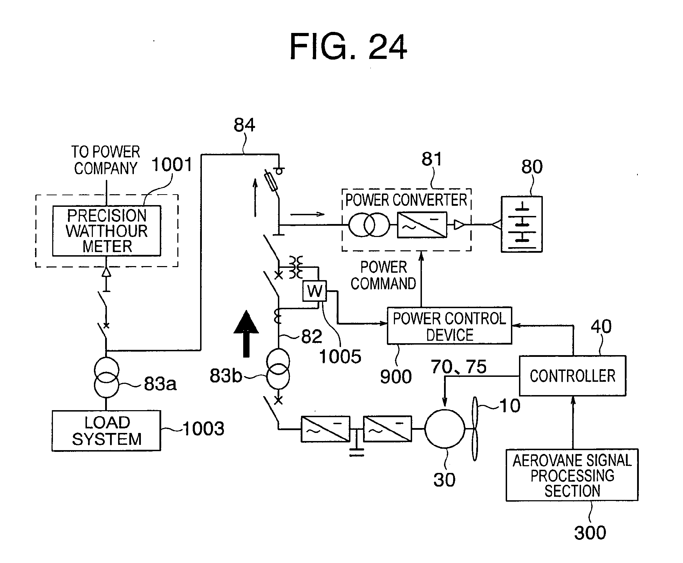

FIG. 24 shows an example. In FIG. 24, the same or corresponding components as or to those shown in FIG. 19 are denoted by the same reference characters and are not described here again. FIG. 24 shows a common configuration in which an output-smoothing device 80, including a large-capacity storage battery and a flywheel, is provided at the output end of a wind power generation system. The output-smoothing device 80 is not necessarily provided at the output end of the wind power generation system, but may be provided within the electric power system. In operations of the wind power generation system having the output-smoothing device 80, an electric power controller 900 calculates the predicted amount of generated power on the basis of data from the laser aerovane. The electric power controller 900 has a predicted amount calculating means that uses the algorithm shown in FIG. 23. According to fluctuations of the predicted amount, the power-smoothing device 80 is worked so that the power is within the range that the system permits, and thus feed-forward control is applied to achieve optimum operations (the smoothing device stores and discharges power according to the predicted amount of fluctuations of the wind-generated power).

This facilitates the introduction of the wind power generation system and reduces operations of the Diesel-engine generators and hence reduces the fuel cost and maintenance cost, while the diesel power generation has been unavoidably used much because the wind power generation is difficult to introduce because of its large output fluctuations.

INDUSTRIAL APPLICABILITY

According to the present invention, the direction and velocity of the wind to a wind power generator are predicted by observing the condition of the wind using a laser aerovane. On the basis of the prediction, yaw control and pitch control are performed to enable the wind power generation system to operate highly efficiently and to stabilize the output, and further, an evaluation is made about the benefits obtained therefrom, e.g., an increase in the amount of power for sale and an improvement of environmental influence. Thus, the present invention is applicable to electric power systems of various kinds, and establishes the wind-state observation service using a laser aerovane as a business.

**Claims**

1.  A wind power generation evaluation system, **characterized by** comprising:

    at least one wind power generator connected to an electric power system;
    a laser aerovane that measures a wind direction and a wind velocity at a position distant from the wind power generator by using a laser, so as to predict a wind direction and a wind velocity at the wind power generator;
    a second aerovane that measures a wind direction and a wind velocity at the wind power generator;
    windpower generation output calculation means that integrates a difference between power outputs calculated on the basis of measurements by the laser aerovane and the second aerovane while referring to a windmill performance curve indicating an output power characteristic of the wind power generator with respect to the wind velocity, so as to obtain a difference between amounts of generated power; and
    additional value calculation means that calculates an additional value of an influence on the environment on the basis of the difference between the amounts of generated power obtained by the wind power generation output calculation means.

2.  The wind power generation evaluation system according to claim 1, **characterized in that** the at least one wind power generator connected to the electric power system includes a plurality of wind power generators, and each of the plurality of wind power generators is equipped with the laser aerovane, the second aerovane, the wind power generation output calculation means, and the additional value calculation means.

3.  The wind power generation evaluation system according to claim 1, **characterized in that** the at least one wind power generator connected to the electric power system includes a plurality of wind power generators, the plurality of wind power generators share the single laser aerovane, and each of the plurality of wind power generators is equipped with the second aerovane, the wind power generation output calculation means, and the additional value calculation means.

4.  The wind power generation evaluation system according to any one of claims 1 to 3, **characterized in that** a resistor or an electric power absorbing device is connected to the electric power system, and an electric power converter that supplies power to the resistor or electric power absorbing device according to control based on measurements by the laser aerovane is also connected to the electric power system.

5.  The wind power generation evaluation system according to any one of claims 1 to 3, **characterized in that** an output-smoothing device and an electric power smoothing device that supplies power to the output-smoothing device are connected to the electric power system, and output smoothing control is performed on the basis of measurements by the laser aerovane.

6. The wind power generation evaluation system according to any one of claims 1 to 3, **characterized in that** the wind power generation output calculation means and the additional value calculation means are provided at a single node on a network in such a manner that information calculated by the wind power generation output calculation means and the additional value calculation means can be utilized through the network.

7. A predictive control service system for use with a wind power generator **characterized in that** a service provider rents a user of the service a predictive control system for use with a wind power generator using a laser aerovane that measures a wind direction and a wind velocity at a position distant from the wind power generator by using a laser in order to predict a wind direction and a wind velocity at the wind power generator, and the service provider receives a part of an increase in a profit obtained by power generation using the predictive control system, and the predictive control service system comprising:

wind power generation output calculation means for integrating a difference between power outputs calculated on the basis of measurements by the laser aerovane and a second aerovane that measures a wind direction and a wind velocity at the wind power generator, while referring to a windmill performance curve indicating an output power characteristic of the wind power generator with respect to the velocity of the wind, so as to obtain a difference between amounts of generated power;
additional value calculation means for converting the difference between the amounts of generated power obtained by the wind power generation output calculation means to an index indicating an influence on the environment on the basis of a table indicating a relation between an amount of generated power and the index indicating the influence on the environment; and
means for obtaining total profits and a share of the total profits that is given to the service provider on the basis of previously stored unit values of profits about the difference between the amounts of generated power and the index indicating the influence on the environment and on the basis of a previously stored percentage of share of the profits that is given to the service provider, and for performing an automatic transfer procedure through a network via a terminal of a banking system.

# FIG. 1

# FIG. 2

# FIG. 3

WIND VELOCITY
Vm (+θ)

200

215

205

150

+θ

−θ

206

216

x DIRECTION WIND
VELOCITY Vx

r DIRECTION WIND
VELOCITY Vr

150

FOCAL DISTANCE R

WIND VELOCITY
Vm (−θ)

# FIG. 4

(a)

**401** — DATA ON DIRECTION AND VELOCITY OF WIND X[m] AHEAD AT CURRENT TIME $\tau$

**402a** — CALCULATING DIRECTION AND VELOCITY OF WIND THAT WINDMILL WILL CATCH AFTER t SECONDS

**403a** — OPTIMIZING YAW ANGLE FOR t SECONDS

**404a** — TRANSMITTING Δt-SECOND YAW ANGLE CONTROL SIGNAL

**405a** — YAW ANGLE CONTROL DRIVE CHANGES YAW ANGLE

(b)

**406b** — ACTUAL DATA ON DIRECTION AND VELOCITY OF WIND AT CURRENT TIME $\tau$

**407b** — ACTUAL DATA ON PITCH ANGLE AT CURRENT TIME $\tau$

**401** — DATA ON DIRECTION AND VELOCITY OF WIND X[m] AHEAD AT CURRENT TIME $\tau$

**402b** — CALCULATING DIRECTION AND VELOCITY OF WIND THAT WINDMILL WILL CATCH AFTER t SECONDS

**403b** — OPTIMIZING PITCH ANGLE FOR t SECONDS

**404b** — TRANSMITTING Δt-SECOND PITCH ANGLE CONTROL SIGNAL

**405b** — PITCH ANGLE CONTROL DRIVE CHANGES PITCH ANGLE

EP 1 744 058 A1

# FIG. 5

# FIG. 6

# FIG. 7

# FIG. 8

EP 1 744 058 A1

DATA ON DIRECTION AND VELOCITY OF WIND X[m] AHEAD AT CURRENT TIME τ ~701

OPERATION 1

OPERATION 2a TO OPERATION 2c

| CALCULATING DIRECTION AND VELOCITY OF WIND THAT WIND-VELOCITY DETECTING OPTICAL SYSTEM SECTION WILL CATCH AFTER t SECONDS ~711 | CALCULATING DIRECTION AND VELOCITY OF WIND THAT WIND-MILL 610a WILL CATCH AFTER ta SECONDS ~721a | CALCULATING DIRECTION AND VELOCITY OF WIND THAT WIND-MILL 610c WILL CATCH AFTER tc SECONDS ~721c |
|---|---|---|
| OPTIMIZING YAW ANGLE FOR t SECONDS ~712 | OPTIMIZING YAW ANGLE, PITCH ANGLE AND NUMBER OF ROTATIONS FOR ta SECONDS ~722a | OPTIMIZING YAW ANGLE, PITCH ANGLE AND NUMBER OF ROTATIONS FOR tc SECONDS ~722c |
| TRANSMITTING Δt-SECOND YAW ANGLE CONTROL SIGNAL ~713 | TRANSMITTING Δta-SECOND YAW ANGLE, PITCH ANGLE AND OUTPUT CONTROL SIGNAL ~723a | TRANSMITTING Δtc-SECOND YAW ANGLE, PITCH ANGLE AND OUTPUT CONTROL SIGNAL ~723c |
| YAW ANGLE CONTROL DRIVE CHANGES YAW ANGLE ~714 | YAW ANGLE CONTROL DRIVE CHANGES YAW ANGLE PITCH ANGLE CONTROL DRIVE CHANGES PITCH ANGLE INVERTER CHANGES OUTPUT ~724a | YAW ANGLE CONTROL DRIVE CHANGES YAW ANGLE PITCH ANGLE CONTROL DRIVE CHANGES PITCH ANGLE INVERTER CHANGES OUTPUT ~724c |

# FIG. 9

EP 1 744 058 A1

# FIG. 10

(b)

ENLARGED    SMOOTHING

RESULT

(c)

(a)

EP 1 744 058 A1

# FIG. 11

# FIG. 12

Vave (AVERAGE WIND VELOCITY)

$F_O$ — OUTPUT POWER CONTROL FUNCTION → P' (OUTPUT POWER TARGET VALUE) → PI → P1 (OUTPUT POWER COMMAND VALUE) → POWER CONTROL DEVICE

$F_R$ — ROTATION NUMBER CONTROL FUNCTION (IN CASE OF VARIABLE-SPEED WINDMILL) → N' (ROTATION NUMBER TARGET VALUE) — N (ACTUAL NUMBER OF ROTATIONS)

$F_Y$ — YAW ANGLE CONTROL FUNCTION → Y' (YAW ANGLE TARGET VALUE) → PI → Y (YAW ANGLE COMMAND VALUE) → YAW ANGLE DRIVE CONTROL DEVICE

$F_P$ — PITCH ANGLE CONTROL FUNCTION → P' (PITCH ANGLE TARGET VALUE) → PI → P2 (PITCH ANGLE COMMAND VALUE) → PITCH ANGLE DRIVE CONTROL DEVICE

TO OUTPUT-SMOOTHING DEVICE (80)

32

# FIG. 13

DATA ON DIRECTION AND VELOCITY OF WIND X[m] AHEAD AT CURRENT TIME $\tau$ ~701

G

H

OPERATION 1

CALCULATING DIRECTION AND VELOCITY OF WIND THAT WIND-VELOCITY DETECTING OPTICAL SYSTEM SECTION WILL CATCH AFTER t SECONDS ~711

OPTIMIZING YAW ANGLE FOR t SECONDS ~712

TRANSMITTING Δt-SECOND YAW ANGLE CONTROL SIGNAL ~713

YAW ANGLE CONTROL DRIVE CHANGES YAW ANGLE ~714

OPERATION 2a TO OPERATION 2c

CALCULATING DIRECTION AND VELOCITY OF WIND THAT WINDMILL 610a WILL CATCH AFTER ta SECONDS ~721a

OPTIMIZING YAW ANGLE, PITCH ANGLE ((AND NUMBER OF ROTATIONS)) FOR ta SECONDS ~722a

TRANSMITTING Δta-SECOND PITCH ANGLE (AND OUTPUT) CONTROL SIGNAL ~723a

YAW ANGLE CONTROL DRIVE CHANGES YAW ANGLE PITCH ANGLE CONTROL DRIVE CHANGES PITCH ANGLE

( INVERTER CHANGES OUTPUT ) ~724a

DESCRIPTION IN DOUBLE PARENTHESIS INDICATES CASE OF EMPLOYING VARIABLE-SPEED WIND POWER GENERATION SYSTEM

EP 1 744 058 A1

# FIG. 14

OPERATION 2a
TO OPERATION 2c

| | OPERATION 3 |

CALCULATING DIRECTION AND VELOCITY OF WIND THAT WIND-MILL 610c WILL CATCH AFTER tc SECONDS ~721c

OPTIMIZING YAW ANGLE, PITCH ANGLE, ((AND NUMBER OF ROTATIONS)) FOR tc SECONDS ~722c

TRANSMITTING Δtc-SECOND PITCH ANGLE AND (OUTPUT) CONTROL SIGNAL ~723c

YAW ANGLE CONTROL DRIVE CHANGES YAW ANGLE PITCH ANGLE CONTROL DRIVE CHANGES PITCH ANGLE

( INVERTER CHANGES OUTPUT ) ~724c

CALCULATING DIRECTION AND VELOCITY OF WIND THAT EACH WINDMILL WILL CATCH AFTER t SECONDS ~931

OPTIMIZING SMOOTHING DEVICE ELECTRIC POWER INPUT/OUTPUT FOR t SECONDS ~932

TRANSMITTING Δt-SECOND SMOOTHING DEVICE ELECTRIC POWER INPUT/OUTPUT CONTROL SIGNAL ~933

ELECTRIC POWER INPUT/OUTPUT OF OUTPUT-SMOOTHING DEVICE IS CARRIED OUT BY POWER CONVERTER ON SMOOTHING DEVICE ~934

DESCRIPTION IN DOUBLE PARENTHESIS INDICATES CASE OF EMPLOYING VARIABLE-SPEED WIND POWER GENERATION SYSTEM

EP 1 744 058 A1

# FIG. 15

(a)

WIND DIRECTION
AT TIME $t_1$ ($\Phi_1$)

$\Phi_1 - \Phi_0$

WIND DIRECTION
AT TIME $t_0$ ($\Phi_0$)

$V_0$

$V_0$

WINDMILL DIRECTION
AT TIME $t_0$ ($\Phi_0$)

WINDMILL DIRECTION THAT
FACES WIND DIRECTION AFTER
CHANGE

$\Phi_1 - \Phi_0$

(b)

WINDMILL
ANGLE

$\Phi_1$

$\Phi_0$

$t_0$

TIME LAG $t_d$

$t_{01}$

$t_1$

$t_2$

TIME t

35

# FIG. 16

# FIG. 17

(a)

(b)

# FIG. 18

# FIG. 19

# FIG. 20

(a)

(b)

(c)

# FIG. 21

EP 1 744 058 A1

# FIG. 22

# FIG. 23

TO OUTPUT-SMOOTHING DEVICE

PREDICTED AMOUNT (A) OF POWER GENERATION OUTPUT OF WIND POWER GENERATION SYSTEM BASED ON LASER PREDICTION CONTROL SYSTEM

A

B

REQUISITE POWER GENERATION AMOUNT (B-A) OF ELECTRIC POWER SMOOTHING DEVICE

OUTPUT CAPACITY (B) TO SYSTEM

# FIG. 24

## INTERNATIONAL SEARCH REPORT

| International application No. |
| --- |
| PCT/JP2004/006499 |

| A. CLASSIFICATION OF SUBJECT MATTER |
| --- |
| Int.Cl⁷ F03D7/04 |

According to International Patent Classification (IPC) or to both national classification and IPC

| B. FIELDS SEARCHED |
| --- |

Minimum documentation searched (classification system followed by classification symbols)
Int.Cl⁷ F03D7/04, G01P5/00, H02P9/00

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2003-83229 A (Mitsubishi Heavy Industries, Ltd.), 09 March, 2003 (09.03.03), Full text; Figs. 1 to 2 (Family: none) | 1-6 |
| A | JP 5-87823 A (Raytheon Co.), 06 April, 1993 (06.04.93), Full text; Figs. 1 to 5 & US 5170218 A & GB 2254975 A | 1-6 |
| A | JP 2002-152975 A (Mitsubishi Heavy Industries, Ltd.), 24 May, 2002 (24.05.02), Full text; Figs. 1 to 3 (Family: none) | 1-6 |

☒ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 July, 2004 (29.07.04) | 17 August, 2004 (17.08.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/006499 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 11-159436 A (Hitachi Engineering & Services Co., Ltd.), 15 June, 1999 (15.06.99), Full text; Figs. 1 to 3 (Family: none) | 1-6 |
| A | JP 2002-27679 A (Mitsubishi Heavy Industries, Ltd.), 25 January, 2002 (25.01.02), Full text; Figs. 1 to 7 (Family: none) | 4-5 |
| A | JP 2000-87841 A (Toshiba Corp.), 28 March, 2000 (28.03.00), Full text; Figs. 1 to 4 (Family: none) | 6 |

Form PCT/ISA/210 (continuation of second sheet) (January 2004)

## INTERNATIONAL SEARCH REPORT

International application No.

PCT/JP2004/006499

| Box No. II | Observations where certain claims were found unsearchable (Continuation of item 2 of first sheet) |

This international search report has not been established in respect of certain claims under Article 17(2)(a) for the following reasons:

1. ☒ Claims Nos.: 7
   because they relate to subject matter not required to be searched by this Authority, namely:

   (See extra sheet)

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest.

☐ No protest accompanied the payment of additional search fees.

Form PCT/ISA/210 (continuation of first sheet (2)) (January 2004)

**INTERNATIONAL SEARCH REPORT**

| International application No. |
|---|
| PCT/JP2004/006499 |

Continuation of Box No.II-1 of continuation of first sheet(2)

The "lending installation" in claim 7 is nothing but an artificial agreement based on business.

Moreover, the configuration of "means for performing automatic transfer ·····" does not specify the information processing for calculating the gross income or dividend to the service provider, or the procedure for automatic transfer. That is, information processing by software is not specifically realized by using hardware resources. Accordingly, means by artificial action based on the business is included.

Consequently, the matter disclosed in claim 7 as a whole falls in schemes, rules or methods of doing business.

**EP 1 744 058 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002152975 A

- JP 11159436 A